# EUROPÄISCHE PATENTSCHRIFT

(11) **EP 3 429 330 B1**
(45) Veröffentlichungstag und Bekanntmachung des Hinweises auf die Patenterteilung: **21.07.2021**
(21) Anmeldenummer: 17710951.9
(22) Anmeldetag: 16.03.2017
(51) Int. Cl.: A01D 34/69

(54) **HANDGEFÜHRTES GARTENGERÄT**
WALK BEHIND GARDENTOOL
OUTIL DE JARDINAGE GUIDÉ MANUELLEMENT

(30) Priorität: 17.03.2016 DE 102016204403
(43) Veröffentlichungstag der Anmeldung: 23.01.2019
(73) Patentinhaber: Robert Bosch GmbH, 70442 Stuttgart (DE)
(72) Erfinder: WILKS, Antony, Bury St Edmunds Suffolk IP33 3XA (GB)
(86) Internationale Anmeldenummer: PCT/EP2017/056244
(87) Internationale Veröffentlichungsnummer: WO 2017/158095

(56) Entgegenhaltungen:
- EP-A1- 2 805 597
- FR-A1- 2 755 573
- US-A1- 2013 046 448

## Beschreibung

### Stand der Technik

In der FR 2 755 573 ist bereits eine handgeführte Gartenbearbeitungsmaschine, insbesondere ein Schieberasenmäher, mit zumindest einer Grundeinheit, mit zumindest einer Führungseinheit, welche zumindest einen Handgriff aufweist, und mit zumindest einer Erfassungseinheit, welche zu einer Erfassung einer von einem Bediener gewünschten Vorschubsunterstützung der Grundeinheit vorgesehen ist, vorgeschlagen worden.

### Offenbarung der Erfindung

Die Erfindung betrifft eine handgeführten Gartenbearbeitungsmaschine mit den Merkmalen des Anspruchs 1 bzw. ein Verfahren zu einem Betrieb einer handgeführten Gartenbearbeitungsmaschine mit den Merkmalen des Anspruchs 10.

Vorzugsweise ist die Erfassungseinheit zu einer Erfassung einer von einem Bediener gewünschten Unterstützung bei einer Bewegung der handgeführten Gartenbearbeitungsmaschine vorgesehen. Besonders bevorzugt weist die handgeführte Gartenbearbeitungsmaschine insbesondere eine als Unterstützungsantrieb ausgebildete Antriebseinheit auf, welche dazu vorgesehen ist, einen Bediener bei einer Bewegung, insbesondere bei einem Schieben der handgeführten Gartenbearbeitungsmaschine, zumindest zu unterstützen. Vorzugsweise ist die Erfassungseinheit zu einer Erfassung einer Relativbewegung zumindest zwei gegenüberliegender Enden des Teilbereichs der Führungseinheit vorgesehen. Unter einer "handgeführten Gartenbearbeitungsmaschine" soll in diesem Zusammenhang insbesondere eine direkt von einem Bediener geführte Gartenbearbeitungsmaschine erstanden werden. Vorzugsweise soll darunter insbesondere eine Gartenbearbeitungsmaschine verstanden werden, welche von einem Bediener zumindest teilweise direkt bewegt, insbesondere geschoben, wird. Bevorzugt ist die Gartenbearbeitungsmaschine als Schieberasenmäher ausgebildet. Hierbei kann die Gartenbearbeitungsmaschine eine als Unterstützungsantrieb ausgebildete Antriebseinheit zu einer Unterstützung des Bedieners bei einem Schieben der Gartenbearbeitungsmaschine über eine zu bearbeitende Fläche aufweisen. Weitere, einem Fachmann als sinnvoll erscheinende Ausgestaltungen der Gartenbearbeitungsmaschine sind ebenfalls denkbar, wie beispielsweise eine Ausgestaltung der Gartenbearbeitungsmaschine als Mulcher, als Rasenlüfter, als Vertikutierer usw. Ferner soll in diesem Zusammenhang unter einer "Grundeinheit" insbesondere eine Einheit verstanden werden, welche sich während eines Betriebs zumindest im Wesentlichen direkt, insbesondere über Räder oder dergleichen, auf einer zu bearbeitenden Fläche abstützt. Vorzugsweise wird die Einheit während eines Betriebs insbesondere von einem Bediener mittels der Führungseinheit über die zu bearbeitende Fläche bewegt. Besonders bevorzugt weist die Grundeinheit insbesondere eine Bearbeitungseinheit, wie insbesondere eine Mäheinheit, auf, welche zu einer Bearbeitung der zu bearbeitenden Fläche vorgesehen ist. Des Weiteren soll in diesem Zusammenhang unter einer "Führungseinheit" insbesondere eine Einheit verstanden werden, welche zu einer Kontaktierung durch einen Bediener einen Handgriff, insbesondere eine Griffstange, aufweist um während eines Betriebs von einem Bediener zu einer Führung der Gartenbearbeitungsmaschine kontaktiert zu werden. Vorzugsweise soll darunter insbesondere eine Einheit verstanden werden, über welche die Grundeinheit der Gartenbearbeitungsmaschine während eines Betriebs regulär bewegt, insbesondere geschoben, wird.

Ferner soll in diesem Zusammenhang unter einer "Erfassungseinheit" eine Einheit verstanden werden, welche zu einer Erfassung zumindest einer Kenngröße, welche Rückschluss auf eine von einem Bediener gewünschte Vorschubsunterstützung der Grundeinheit gibt, vorgesehen ist. Darunter soll eine Einheit verstanden werden, die dazu vorgesehen ist, zumindest eine Kenngröße der Führungseinheit zu erfassen, welche Rückschluss auf eine von einem Bediener gewünschte Vorschubsunterstützung der Grundeinheit gibt. Besonders bevorzugt soll darunter insbesondere eine Einheit verstanden werden, die zu einer Erfassung einer insbesondere von einem Bediener auf die Führungseinheit ausgeübten Kraft vorgesehen ist. Vorzugsweise weist die Erfassungseinheit dazu insbesondere zumindest einen Sensor auf. Des Weiteren soll unter einer "Verformung zumindest eines Teilbereichs der Führungseinheit" eine Relativbewegung zweier miteinander verbundener Punkte des Teilbereichs der Führungseinheit verstanden werden. Die zwei Punkte des Teilbereichs der Führungseinheit sind fest, vorzugsweise einstückig miteinander verbunden. Besonders bevorzugt soll darunter insbesondere eine Relativbewegung zweier über den Teilbereich der Führungseinheit verbundener Bereiche der Führungseinheit verstanden werden, wobei die weiteren Bereiche über den Teilbereich verbunden sind. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der handgeführten Gartenbearbeitungsmaschine kann vorteilhaft eine von einem Bediener gewünschte Vorschubsunterstützung der Grundeinheit erfasst werden. Vorzugsweise kann dadurch vorteilhaft zuverlässig eine Kenngröße erfasst werden, über welche eine als Unterstützungsantrieb ausgebildete Antriebseinheit angesteuert werden kann. Ferner kann dadurch insbesondere eine vorteilhaft intuitive Bedienung der handgeführten Gartenbearbeitungsmaschine erreicht werden.

Ferner wird vorgeschlagen, dass die zumindest eine Erfassungseinheit zumindest einen Sensor aufweist, welcher in einem Mittelbereich der Führungseinheit zwischen dem Handgriff und einem Anschlussbereich zu der Grundeinheit angeordnet ist. Vorzugsweise weist die zumindest eine Erfassungseinheit zumindest zwei Sensoren auf, die jeweils auf gegenüberliegenden Seiten der Führungseinheit in einem Mittelbereich der Führungseinheit, zwischen dem Handgriff und einem Anschlussbereich zu der Grundeinheit, angeordnet sind. Bevorzugt ist der Handgriff über zwei Verbindungseinheiten, insbesondere Führungsstangen, mit der Grundeinheit verbunden. Besonders bevorzugt ist jeweils einer der Sensoren in oder an jeweils einer der Verbindungseinheiten angeordnet. Vorzugsweise ist der zumindest eine Sensor der Erfassungseinheit in einem Nahbereich des zumindest einen Handgriffs in einem Mittelbereich der Führungseinheit angeordnet. Unter einem "Sensor" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, einem Fachmann als sinnvoll erscheinende Sensoreinheiten denkbar. Ferner soll in diesem Zusammenhang unter einem "Mittelbereich" der Führungseinheit insbesondere ein räumlicher Bereich verstanden werden, welcher sowohl vom dem Handgriff als auch von dem Anschlussbereich zu der Grundeinheit beabstandet ist. Vorzugsweise ist der Mittelbereich durch einen gedachten Quader definiert, welcher den räumlichen Bereich begrenzt und einen mittleren Teilquader eines kleinsten gedachten Quaders bildet, welcher die Führungseinheit gerade noch vollständig umschließt. Der kleinste gedachte Quader ist dabei insbesondere in einer Richtung von den Handgriffen zu dem Anschlussbereich hin in einen oberen Teilquader, einen mittleren Teilquader und einen unteren Teilquader unterteilt. Der obere und der untere Teilquader bilden insbesondere jeweils zumindest 5%, vorzugsweise zumindest 10% und besonders bevorzugt zumindest 20% eines Volumens des kleinsten gedachten Quaders. Der mittlere Teilquader bildet insbesondere maximal 90%, vorzugsweise maximal 80% und besonders bevorzugt maximal 60% eines Volumens des kleinsten gedachten Quaders. Dadurch kann insbesondere eine vorteilhaft geschützte Anordnung des Sensors der Erfassungseinheit erreicht werden. Insbesondere kann durch die Höhe der Anordnung ein Schutz vor niedrigen Pflanzen erreicht werden. Ferner kann durch die Entfernung zu dem Handgriff insbesondere ein zuverlässiges Messergebnis des Sensors der Erfassungseinheit gewährleistet werden. Es kann ein hohes Moment bereitgestellt werden.

Alternativ wäre jedoch auch denkbar, dass die zumindest eine Erfassungseinheit zumindest einen Sensor aufweist, welcher in einem Handgriff und/oder einer Griffstange der Führungseinheit angeordnet ist. Vorzugsweise weist die zumindest eine Erfassungseinheit zumindest zwei Sensoren auf, die in jeweils einem Handgriff der Führungseinheit angeordnet sind. Dadurch kann insbesondere eine vorteilhaft geschützte Anordnung des Sensors der Erfassungseinheit erreicht werden. Insbesondere kann durch die Höhe der Anordnung ein Schutz vor Beschädigungen durch z.B. niedrige Pflanzen erreicht werden. Ferner kann dadurch zudem überwacht werden, ob sich die Hände eines Bedieners an den Handgriffen der Führungseinheit befinden.

Des Weiteren wird vorgeschlagen, dass der zumindest eine Teilbereich der Führungseinheit gegenüber einem angrenzenden Bereich der Führungseinheit eine geringere Biegesteifigkeit aufweist. Vorzugsweise weist der zumindest eine Teilbereich der Führungseinheit gegenüber einem angrenzenden Bereich der Führungseinheit eine wesentlich geringere Biegesteifigkeit auf. Besonders bevorzugt weist der zumindest eine Teilbereich der Führungseinheit gegenüber einem Rest der Führungseinheit eine wesentlich geringere Biegesteifigkeit auf. Unter einer "Biegesteifigkeit" soll in diesem Zusammenhang insbesondere eine Kenngröße verstanden werden, welche den Widerstand eines Körpers gegen elastische Verformung durch eine Kraft, insbesondere durch ein Biegemoment, beschreibt. Darunter, dass "der zumindest eine Teilbereich der Führungseinheit gegenüber einem angrenzenden Bereich der Führungseinheit eine geringere Biegesteifigkeit" aufweist, soll in diesem Zusammenhang insbesondere verstanden werden, dass ein Wert einer Biegesteifigkeit des Teilbereichs der Führungseinheit maximal 80%, vorzugsweise maximal 60%, bevorzugt maximal 40% und besonders bevorzugt maximal 20% eines Werts einer Biegesteifigkeit des angrenzenden Bereich der Führungseinheit beträgt. Vorzugsweise wird die Biegesteifigkeit der Bereiche dabei insbesondere in derselben Achse und/oder in parallel zueinander verlaufenden Achsen betrachtet. Besonders bevorzugt erfolgt eine gedachte Belastung gegenüber welcher die Biegesteifigkeit betrachtet wird, parallel zu einer regulären Standebene der handgeführten Gartenbearbeitungsmaschine. Die geringere Biegesteifigkeit kann dabei insbesondere durch eine Materialwahl, eine Form, wie insbesondere einen Querschnitt, und/oder andere, einem Fachmann als sinnvoll erscheinende Maßnahmen erreicht werden. Dadurch kann insbesondere zuverlässig eine Verformung erfasst werden. Vorzugsweise kann dadurch ein vorteilhaft hoher Messausschlag der Erfassungseinheit erreicht werden. Insbesondere kann dadurch insbesondere eine vorteilhaft genaue Erfassung erreicht werden. Ferner kann dadurch insbesondere erreicht werden, dass eine Verformung zumindest teilweise auf den Teilbereich kanalisiert wird.

Alternativ wäre jedoch auch denkbar, dass der zumindest eine Teilbereich der Führungseinheit gegenüber einem angrenzenden Bereich der Führungseinheit ein geringeres Elastizitätsmodul aufweist. Vorzugsweise weist zumindest ein Teilbereich der Handgriffe der Führungseinheit, insbesondere eine Grifffläche, welche zu einer Kontaktierung durch einen Bediener vorgesehen ist, ein geringes Elastizitätsmodul auf. Bevorzugt ist insbesondere eine Außenhülle der Handgriffe der Führungseinheit leicht deformierbar. Besonders bevorzugt befindet sich der zumindest eine Sensor der Erfassungseinheit unter einer Außenhülle einer der Handgriffe der Führungseinheit. Darunter, dass "der zumindest eine Teilbereich der Führungseinheit gegenüber einem angrenzenden Bereich der Führungseinheit ein geringeres Elastizitätsmodul" aufweist, soll in diesem Zusammenhang insbesondere verstanden werden, dass ein Wert eines Elastizitätsmoduls des Teilbereichs der Führungseinheit maximal 80%, vorzugsweise maximal 60%, bevorzugt maximal 30% und besonders bevorzugt maximal 10% eines Werts eines Elastizitätsmoduls des angrenzenden Bereichs der Führungseinheit beträgt. Dadurch kann insbesondere zuverlässig eine Verformung erfasst werden. Insbesondere kann dadurch insbesondere eine vorteilhaft genaue Erfassung erreicht werden. Ferner kann dadurch insbesondere erreicht werden, dass eine Verformung zumindest teilweise auf den Teilbereich kanalisiert wird.

Des Weiteren wird vorgeschlagen, dass die zumindest eine Erfassungseinheit zumindest einen elektrischen Sensor aufweist. Vorzugsweise weist die Erfassungseinheit zumindest zwei elektrische Sensoren auf, die insbesondere jeweils auf gegenüberliegenden Seiten der Führungseinheit angeordnet sind. Bevorzugt ist jeweils einer der Sensoren in oder an jeweils einer der Verbindungseinheiten angeordnet. Besonders bevorzugt wird ein Signal der Sensoren jeweils getrennt voneinander erfasst. Ein elektrischer Sensor kann dabei sowohl passiv als auch aktiv ausgebildet sein und kann ferner sowohl eine Bewegung als auch eine direkte Verformung erfassen. Aktive Sensoren benötigen in der Regel insbesondere eine Verstärkung und/oder eine Signalverarbeitung, um ein brauchbares Signal zu erreichen, können dafür jedoch auch geringe Verformungen oder Bewegungen erfassen. Passive Sensoren benötigen dagegen keine Elektronik, dafür aber eine größere Verformung oder Bewegung. Der zumindest eine elektrische Sensor ist insbesondere als ein Kraftaufnehmer, insbesondere eine Brückenschaltung mit vier Dehnungsmesstreifen, als ein induktiver Sensor, als ein Force Sensing Resistor (FSR), als ein Hall Sensor und/oder als ein Dehnungsmesstreifen ausgebildet. Grundsätzlich ist jedoch auch eine andere, einem Fachmann als sinnvoll erscheinende Ausbildung des Sensors denkbar. Grundsätzlich ist jedoch auch eine Kombination von Sensoren denkbar, wie insbesondere durch Sensorfusion. Dadurch kann insbesondere eine vorteilhaft zuverlässige Erfassungseinheit bereitgestellt werden. Insbesondere kann dadurch ein vorteilhaft genaues Messergebnis erreicht werden. Bei der Verwendung von zwei elektrischen Sensoren können insbesondere zwischen einer linken und rechten Seite differierende Verformungen erfasst werden. Insbesondere kann dadurch erfasst werden, wenn von einem Bediener eine Seite stärker belastet wird als die andere. Ferner kann dadurch auch erfasst werden, wenn ein Bediener eine Kurve fahren möchte.

Es wird ferner vorgeschlagen, dass der zumindest eine elektrische Sensor der Erfassungseinheit von einem Dehnungsmessstreifen gebildet ist. Vorzugsweise sind die zumindest zwei elektrischen Sensoren der Erfassungseinheit jeweils von einem Dehnungsmessstreifen gebildet. Grundsätzlich wäre jedoch auch denkbar, dass lediglich einer der elektrischen Sensoren von einem Dehnungsmesstreifen gebildet ist und der zweite elektrische Sensor von einem alternativen, insbesondere günstigeren Sensor gebildet ist, wie beispielsweise einem Temperatursensor. Dadurch kann insbesondere eine vorteilhaft zuverlässige Erfassungseinheit bereitgestellt werden. Vorzugsweise kann dadurch ein besonders zuverlässiger elektrischer Sensor bereitgestellt werden. Ferner kann dadurch insbesondere ein vorteilhaft robuster und kostengünstiger elektrischer Sensor bereitgestellt werden. Ferner kann dadurch insbesondere ein Sensor bereitgestellt werden, welcher lediglich eine sehr geringe Messdurchbiegung benötigt. Hierdurch kann ermöglicht werden, dass die Führungseinheit im Wesentlichen starr bleibt und lediglich eine nicht wahrnehmbare Verformung erfährt. Alternativ wäre jedoch auch denkbar, dass der zumindest eine elektrische Sensor der Erfassungseinheit von einem Drucksensor, wie beispielsweise von einem piezoelektrischen Sensor, gebildet ist.

Es wird weiter vorgeschlagen, dass die Erfassungseinheit zu einer Erfassung zumindest einer Kenngröße einer mechanischen Spannung in dem zumindest einen Teilbereichen der Führungseinheit vorgesehen ist. Vorzugsweise ist die Erfassungseinheit zu einer Erfassung zumindest einer Kenngröße der Verformung zumindest eines Teilbereichs der Führungseinheit vorgesehen. Bevorzugt wird mittels des zumindest einen Sensors, vorzugsweise mittels der zumindest zwei Sensoren, der Erfassungseinheit jeweils getrennt voneinander jeweils zumindest eine Kenngröße einer mechanischen Spannung in dem zumindest einen Teilbereichen der Führungseinheit erfasst. Es sind verschiedene, einem Fachmann als sinnvoll erscheinende Kenngrößen einer mechanischen Spannung denkbar, insbesondere soll darunter jedoch eine Richtung und/oder eine Stärke einer mechanischen Spannung, insbesondere der Verformung, verstanden werden. Bei einer Richtung kann vorzugsweise auch lediglich zwischen zwei Richtungen unterschieden werden. Vorzugsweise wird sowohl eine Richtung als auch eine Stärke der mechanischen Spannung, insbesondere der Verformung, erfasst, wobei eine Richtung vorzugsweise durch ein Vorzeichen der Stärke bestimmt wird. Dadurch kann vorteilhaft zuverlässig eine Kenngröße erfasst werden, über welche eine als Unterstützungsantrieb ausgebildete Antriebseinheit angesteuert werden kann. Ferner kann dadurch insbesondere eine vorteilhaft intuitive Bedienung der handgeführten Gartenbearbeitungsmaschine erreicht werden. Des Weiteren kann durch eine Erfassung einer Richtung und/oder einer Stärke der mechanischen Spannung bzw. der Verformung eine vorteilhaft genaue Erfassung eines Bedienerwunsches erreicht werden. Vorteilhaft kann durch eine Erfassung einer Richtung zwischen einem Schieben und einem Ziehen eines Bedieners unterschieden werden. Durch eine Erfassung einer Stärke kann vorteilhaft eine Stärke einer gewünschten Unterstützung erfasst werden. Die Erfassungseinheit kann dadurch vorteilhaft sowohl zu einer Aktivierung als zu auch zu einer Steuerung eines Grades, insbesondere einer Geschwindigkeit der Unterstützung, vorgesehen sein.

Ferner wird vorgeschlagen, dass die Erfassungseinheit zumindest zu einer Erfassung einer Richtung einer mechanischen Spannung in dem zumindest einen Teilbereich der Führungseinheit vorgesehen ist. Vorzugsweise ist die Erfassungseinheit zumindest zu einer Erfassung einer Richtung einer Verformung des zumindest einen Teilbereichs der Führungseinheit vorgesehen. Besonders bevorzugt wird bei der Richtung zwischen zumindest zwei entgegengesetzten Richtungen unterschieden. Vorzugsweise weist die Erfassungseinheit zumindest zwei Sensoren auf, die jeweils zumindest zu einer Erfassung einer Richtung einer mechanischen Spannung in jeweils einem Teilbereich der Führungseinheit vorgesehen sind. Dadurch kann vorteilhaft zuverlässig eine Kenngröße erfasst werden, über welche eine als Unterstützungsantrieb ausgebildete Antriebseinheit angesteuert werden kann. Ferner kann dadurch insbesondere eine vorteilhaft intuitive Bedienung der handgeführten Gartenbearbeitungsmaschine erreicht werden. Vorteilhaft kann durch eine Erfassung einer Richtung zwischen einem Schieben und einem Ziehen eines Bedieners unterschieden werden. Bei der Verwendung von zwei Sensoren können insbesondere zwischen einer linken und rechten Seite differierende Verformungsrichtungen erfasst werden. Insbesondere kann dadurch erfasst werden, wenn von einem Bediener eine Seite entgegen der anderen Seite belastet wird. Ferner kann dadurch auch erfasst werden, wenn ein Bediener eine Kurve fahren möchte.

Des Weiteren wird vorgeschlagen, dass die zumindest eine Führungseinheit zumindest eine Führungsstange aufweist, welche sich von dem Handgriff zu der Grundeinheit erstreckt und zumindest einen Versatz aufweist, welcher in dem zumindest einen Teilbereich liegt. Vorzugsweise ist der Versatz von einem Parallelversatz gebildet. Bevorzugt weist die zumindest eine Führungsstange an dem Versatz zumindest zwei parallel zueinander verlaufende Teilstangen auf, die versetzt zueinander angeordnet sind. Besonders bevorzugt sind die Teilstangen der Führungsstange über ein Verbindungselement, insbesondere eine Verbindungsplatte, miteinander verbunden. Vorzugsweise weist die Führungseinheit zwei Führungsstangen auf, die jeweils einen Versatz aufweisen. Unter einem "Versatz" soll in diesem Zusammenhang insbesondere verstanden werden, dass eine Mittelachse der Führungsstange im Bereich des Versatzes verspringt. Vorzugsweise soll darunter insbesondere verstanden werden, dass eine gedachte erste Tangente, welche die Mittelachse der Führungsstange vor dem Versatz berührt, gegenüber einer zweiten Tangente, welche die Mittelachse der Führungsstange hinter dem Versatz berührt, versetzt angeordnet sind. Bevorzugt sind die Tangenten parallel zueinander versetzt angeordnet. Besonders bevorzugt beträgt ein kleinster Versatz der Tangenten im Bereich des Versatzes zumindest 0,1 cm, vorzugsweise zumindest 0,5 cm und besonders bevorzugt zumindest 1 cm. Dadurch kann insbesondere eine vorteilhafte Führungseinheit bereitgestellt werden. Ferner kann dadurch konstruktiv einfach der Teilbereich geschaffen werden. Insbesondere kann dadurch der Teilbereich konstruktiv einfach mit einer geringeren Biegesteifigkeit erreicht werden.

Es wird ferner vorgeschlagen, dass die zumindest eine Erfassungseinheit zumindest einen Sensor aufweist, welcher in einem Bereich des Versatzes angeordnet ist. Vorzugsweise ist der zumindest eine Sensor der zumindest einen Erfassungseinheit insbesondere direkt an dem Versatz angeordnet. Bevorzugt ist der zumindest eine Sensor der zumindest einen Erfassungseinheit auf dem Verbindungselement, insbesondere der Verbindungsplatte der Führungsstange angeordnet. Besonders bevorzugt weist die zumindest eine Erfassungseinheit zumindest zwei Sensoren auf, die an jeweils einem Versatz einer Führungsstange angeordnet sind. Dadurch kann insbesondere eine vorteilhaft zuverlässige Anordnung der Sensoren erreicht werden. Insbesondere kann dadurch eine Anordnung geschaffen werden, bei welcher eine vorteilhaft zuverlässige Erfassung einer Verformung des Teilbereichs der Führungseinheit erreicht werden kann.

Es wird weiter vorgeschlagen, dass die handgeführte Gartenbearbeitungsmaschine zumindest eine Recheneinheit aufweist, welche, zu einer Ansteuerung einer Antriebseinheit, zu einer Auswertung von Sensordaten der Erfassungseinheit sowie zu einer Auswertung zumindest einer aktuellen Betriebskenngröße der handgeführten Gartenbearbeitungsmaschine vorgesehen ist. Vorzugsweise ist die zumindest eine Recheneinheit, zu einer Ansteuerung einer als Unterstützungsantrieb ausgebildeten Antriebseinheit zur Fortbewegung der handgeführten Gartenbearbeitungsmaschine, zu einer Auswertung von Sensordaten der Erfassungseinheit sowie zu einer Auswertung zumindest einer aktuellen Betriebskenngröße des handgeführten Rasenmähers vorgesehen. Bevorzugt ist die zumindest eine Recheneinheit dazu vorgesehen, abhängig von einer erfassten Verformung des zumindest einen Teilbereichs der Führungseinheit sowie abhängig von einer erfassten, aktuellen Betriebskenngröße der handgeführten Gartenbearbeitungsmaschine eine als Unterstützungsantrieb ausgebildete Antriebseinheit der handgeführten Gartenbearbeitungsmaschine anzusteuern. Besonders bevorzugt ist die Recheneinheit dazu vorgesehen, aus einer erfassten Verformung des zumindest einen Teilbereichs der Führungseinheit sowie aus einer erfassten aktuellen Betriebskenngröße der handgeführten Gartenbearbeitungsmaschine auf eine von einem Bediener gewünschte Vorschubsunterstützung zu schließen. Die Recheneinheit ist insbesondere dazu vorgesehen, aus einer erfassten Verformung sowie aus einer erfassten aktuellen Betriebskenngröße auf eine von einem Bediener benötigte Unterstützung zur Erleichterung eines aktuellen Schiebvorgangs zu schließen. Es sind verschiedene, einem Fachmann als sinnvoll erscheinende aktuelle Betriebskenngrößen denkbar, insbesondere soll darunter jedoch eine aktuelle Lage und/oder eine aktuelle Geschwindigkeit verstanden werden. Ferner sind verschiedene, einem Fachmann als sinnvoll erscheinende Ausbildungen der Antriebseinheit denkbar, wie insbesondere als Verbrennungsmotor und/oder besonders bevorzugt als Elektromotor. Unter einer "Recheneinheit" soll in diesem Zusammenhang insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine und/oder vorteilhaft in einem gemeinsamen Gehäuse angeordnet. Dadurch kann insbesondere eine vorteilhaft zuverlässige Ansteuerung der Antriebseinheit erreicht werden. Insbesondere kann dadurch insbesondere eine vorteilhaft intelligente und benutzerfreundliche Ansteuerung der Antriebseinheit bereitgestellt werden. Vorzugsweise kann dadurch eine für einen Bediener vorteilhafte Ansteuerung der Antriebseinheit erreicht werden.

Ferner wird vorgeschlagen, dass die handgeführte Gartenbearbeitungsmaschine zumindest ein Einstellelement aufweist, welches zu einer Einstellung einer Sensitivität der Erfassungseinheit vorgesehen ist. Vorzugsweise ist das Einstellelement zu einer Einstellung eines Faktors vorgesehen, mit welchem die Verformung des zumindest einen Teilbereichs der Führungseinheit für eine Berechnung einer Vorschubsunterstützung berücksichtigt wird. Bevorzugt ist das Einstellelement als ein Schwellwertgeber zur Einstellung der Sensitivität des Dehnungsmessstreifens ausgebildet. Besonders bevorzugt dient das Einstellelement einem Bediener dazu, einen Faktor einzugeben, über welchen sein Gewicht und/oder seine Kraft und/oder sein gewünschter Unterstützungsgrad berücksichtigt wird. Vorzugsweise ist das Einstellelement an der Führungseinheit angeordnet. Bevorzugt ist das Einstellelement als ein Drehgriff ausgestaltet. Grundsätzlich wäre jedoch auch eine alternative Anordnung und/oder Ausgestaltung denkbar. Unter einem "Einstellelement" soll in diesem Zusammenhang insbesondere ein Element verstanden werden, über welches, insbesondere von einem Bediener, Einstellungen getätigt werden können. Vorzugsweise soll darunter insbesondere ein Element verstanden werden, das dazu vorgesehen ist, bei einem Einstellvorgang eine Eingabegröße von einem Bediener aufzunehmen. Vorzugsweise ist das Element dazu vorgesehen, insbesondere unmittelbar von einem Bediener kontaktiert zu werden, wobei eine Berührung des Einstellelements und/oder eine auf das Bedienelement ausgeübte Betätigungskraft und/oder eine von einem Bediener geänderte Stellung des Einstellelements sensiert wird. Grundsätzlich kann jedoch auch lediglich eine aktuelle Stellung des Einstellelements erfasst werden. Hierdurch kann vorteilhaft eine Individualisierung durch den Bediener erfolgen. Insbesondere kann ein Bediener so die Unterstützung an seine Bedürfnisse, wie insbesondere sein Gewicht und/oder seine Kraft und/oder seinen gewünschten Unterstützungsgrad, anpassen. Es kann eine hohe Bedienerfreundlichkeit erreicht werden.

Des Weiteren wird vorgeschlagen, dass die handgeführte Gartenbearbeitungsmaschine zumindest eine an der Führungseinheit angeordnete Betätigungseinheit aufweist, die zumindest ein beweglich gelagertes Betätigungselement umfasst, welches zu einer Aktivierung eines Stand-by-Betriebszustands vorgesehen ist. Das Betätigungselement ist vorzugsweise drehbar gelagert. Bevorzugt ist das Betätigungselement drehbar entlang eines Winkelbereichs gelagert, der insbesondere kleiner ist als 360°, bevorzugt kleiner ist als 270° und besonders bevorzugt kleiner ist als 180°. Bevorzugt ist das Betätigungselement an der Führungseinheit der handgeführten Gartenbearbeitungsmaschine angeordnet. Es sind verschiedene, einem Fachmann als sinnvoll erscheinende Ausgestaltungen des Betätigungselements denkbar, vorzugsweise ist das Betätigungselement jedoch als ein Betätigungsbügel ausgebildet, welcher drehbar an der Führungseinheit gelagert ist. Besonders bevorzugt ist das Betätigungselement als ein Totmann-Betätigungselement ausgebildet. Unter einem "Stand-by-Betriebszustand" soll in diesem Zusammenhang insbesondere ein Betriebszustand verstanden werden, in welchem die handgeführte Gartenbearbeitungsmaschine betriebsbereit ist. Vorzugsweise soll darunter insbesondere ein aktiver Betriebszustand der handgeführten Gartenbearbeitungsmaschine verstanden werden, bei welchem jedoch eigentliche Nutzfunktionen deaktiviert sein können. Vorzugsweise soll darunter insbesondere ein Betriebszustand verstanden werden, in welchem die Erfassungseinheit aktiv ist, sodass eine Vorschubunterstützung genutzt werden kann. Dadurch kann insbesondere eine hohe Sicherheit der handgeführten Gartenbearbeitungsmaschine erreicht werden. Ferner kann dadurch insbesondere ein hoher Bedienerkomfort erreicht werden.

Ferner geht die Erfindung aus von einem Verfahren zu einem Betrieb einer handgeführten Gartenbearbeitungsmaschine. Es wird vorgeschlagen, dass eine Antriebseinheit der handgeführten Gartenbearbeitungsmaschine zumindest abhängig von einer Verformung eines Teilbereichs einer Führungseinheit der handgeführten Gartenbearbeitungsmaschine angesteuert wird. Vorzugsweise wird die Antriebseinheit der handgeführten Gartenbearbeitungsmaschine zumindest abhängig von einer Richtung und/oder einer Stärke der Verformung des Teilbereichs der Führungseinheit der handgeführten Gartenbearbeitungsmaschine angesteuert. Bevorzugt wird die Antriebseinheit des handgeführten Rasenmähers zudem zumindest abhängig von einer Betriebskenngröße der handgeführten Gartenbearbeitungsmaschine angesteuert. Besonders bevorzugt ist die Antriebseinheit als ein Unterstützungsantrieb ausgebildet, welcher dazu vorgesehen ist, einen Bediener bei einer Bewegung, insbesondere bei einem Schieben der handgeführten Gartenbearbeitungsmaschine, zumindest zu unterstützen. Dadurch kann insbesondere eine vorteilhaft zuverlässige Ansteuerung der Antriebseinheit erreicht werden. Insbesondere kann dadurch insbesondere eine vorteilhaft intelligente und benutzerfreundliche Ansteuerung der Antriebseinheit zu einer Unterstützung des Bedieners bereitgestellt werden. Vorzugsweise kann dadurch eine für einen Bediener vorteilhafte Ansteuerung der Antriebseinheit erreicht werden.

Es wird weiter vorgeschlagen, dass ein Fahrunterstützungsmodus durch Betätigung eines Betätigungselements einer Betätigungseinheit der handgeführten Gartenbearbeitungsmaschine in einen Stand-by-Betriebszustand versetzt wird. Vorzugsweise wird durch Betätigung des Betätigungselements der Betätigungseinheit auch eine Nutzfunktion der handgeführten Gartenbearbeitungsmaschine, insbesondere einer Mäheinheit, in einen Stand-by-Betriebszustand versetzt. Bevorzugt muss das Betätigungselement während eines Betriebs ständig von einem Bediener betätigt werden. Besonders bevorzugt werden die Funktionen der handgeführten Gartenbearbeitungsmaschine deaktiviert, sobald das Betätigungselement losgelassen wird. Hierdurch kann eine vorteilhaft hohe Bediensicherheit erreicht werden. Ferner kann trotz allem eine vorteilhaft hohe Bedienerfreundlichkeit erreicht werden.

Es wird ferner vorgeschlagen, dass die Antriebseinheit der handgeführten Gartenbearbeitungsmaschine in dem Stand-by-Betriebszustand zumindest abhängig von einem Wert einer erfassten Verformung zumindest eines Teilbereichs einer Führungseinheit angesteuert wird. Vorzugsweise wird die Antriebseinheit der handgeführten Gartenbearbeitungsmaschine in dem Stand-by-Betriebszustand zumindest abhängig von einem Wert einer erfassten Verformung zumindest eines Teilbereichs einer Führungseinheit und zumindest abhängig von einem eingestellten Wert des Einstellelements der handgeführten Gartenbearbeitungsmaschine angesteuert. Die handgeführte Gartenbearbeitungsmaschine unterstützt daher einen Bediener, insbesondere sobald die handgeführte Gartenbearbeitungsmaschine in den Stand-by-Betriebszustand gebracht wurde, abhängig von einer Verformung des Teilbereichs der Führungseinheit. Die Verformung des Teilbereichs der Führungseinheit entsteht dabei insbesondere, wenn die handgeführte Gartenbearbeitungsmaschine von einem Bediener geschoben wir. Dadurch kann insbesondere eine vorteilhaft zuverlässige und für einen Bediener intuitive Ansteuerung der Antriebseinheit erreicht werden. Insbesondere kann dadurch insbesondere eine vorteilhaft intelligente und benutzerfreundliche Ansteuerung der Antriebseinheit zu einer Unterstützung des Bedieners bereitgestellt werden. Durch das Einstellelement kann zusätzlich vorteilhaft eine Individualisierung durch den Bediener erfolgen. Insbesondere kann ein Bediener so die Unterstützung an seine Bedürfnisse, wie insbesondere an sein Gewicht und/oder an seine Kraft und/oder an seinen gewünschten Unterstützungsgrad, anpassen.

Es wird weiter vorgeschlagen, dass die Antriebseinheit der handgeführten Gartenbearbeitungsmaschine in dem Stand-by-Betriebszustand abhängig von zumindest einem Nutzungsverlaufsparameter gestartet wird. Vorzugsweise wird die Antriebseinheit der handgeführten Gartenbearbeitungsmaschine in dem Stand-by-Betriebszustand bei Erfassung zumindest eines definierten Nutzungsverlaufs der Gartenbearbeitungsmaschine durch den Bediener gestartet. Bevorzugt sind auf der Gartenbearbeitungsmaschine dazu mehrere Startverlaufsprofile hinterlegt. Die Startverlaufsprofile umfassen vorzugsweise verschiedene Kraftmuster, welche jeweils eine Mindestkraft über verschiedene Messpunkte hinweg definieren. Die Startverlaufsprofile sind dabei insbesondere über Messfenster der Erfassungseinheit über eine definierte Zeit, insbesondere mit einer bestimmten Anzahl Messpunkten, definiert, innerhalb welches eine bestimmte Anzahl Messpunkte eine vorgegebene Mindestkraft überschreiten muss. Vorzugsweise umfasst das Messfenster der Startverlaufsprofile jeweils zumindest drei Messpunkte, von denen mehr als zwei Messpunkte die vorgegebene Mindestkraft überschreiten müssen. Die Antriebseinheit der handgeführten Gartenbearbeitungsmaschine wird in dem Stand-by-Betriebszustand daher vorzugsweise gestartet, wenn zumindest ein Startverlaufsprofil erfüllt ist. Hierdurch kann berücksichtigt werden, dass nicht jeder Bediener die Gartenbearbeitungsmaschine auf die gleiche Weise benutzt oder auch ein Bediener die Gartenbearbeitungsmaschine situationsabhängig anders benutzt. Es gibt also verschiedene Startverlaufsprofile um verschiedene Startszenarien zu berücksichtigen. Dadurch kann insbesondere ein schnelles Starten der Antriebseinheit gewährleistet werden. Insbesondere kann eine vorteilhaft intuitive und schnelle Reaktion der handgeführten Gartenbearbeitungsmaschine auf eine Krafteingabe des Bedieners erreicht werden. Auf der anderen Seite kann dadurch zuverlässig vermieden werden, dass die Antriebseinheit bei einem zurückziehen gestartet wird. Beispielsweise können dadurch Fehler durch Bodenwellen vermieden werden, da diese keine gleichmäßig hohe Krafteinwirkung über das Messfenster bewirken.

Ferner wird vorgeschlagen, dass in einem Fahrbetrieb durch Ansteuerung der Antriebseinheit, die Verformung des Teilbereichs der Führungseinheit auf einen definierten Wert oder Wertebereich geregelt wird. Vorzugsweise wird in einem Fahrbetrieb durch Ansteuerung der Antriebseinheit die von einem Bediener auf die Führungseinheit ausgeübte Kraft auf einen definierten Wert oder Wertebereich geregelt. Bevorzugt wird eine durch die Erfassungseinheit sensierte Kraft zumindest auf weniger als 10 N, vorzugsweise auf weniger als 7 N und bevorzugt zumindest auf mehr als 0 N, besonders bevorzugt auf mehr als 3 N geregelt. Bevorzugt wird die durch die Erfassungseinheit sensierte Kraft zumindest auf einen Wertebereich von 4 N bis 7 N, insbesondere auf einen Wert von annähernd 4 N geregelt. Zu einer Regelung der von einem Bediener auf die Führungseinheit ausgeübten Kraft auf einen definierten Wert oder Wertebereich wird die Antriebseinheit insbesondere bei einer Überschreibung des definierten Werts oder Wertebereichs beschleunigt und bei einer Unterschreitung des definierten Werts oder Wertebereichs abgebremst. Dadurch kann insbesondere eine vorteilhaft intuitive Steuerung der handgeführten Gartenbearbeitungsmaschine erreicht werden. Insbesondere kann dadurch erreicht werden, dass die handgeführte Gartenbearbeitungsmaschine bereits mit geringem Kraftaufwand mit konstanter Geschwindigkeit geschoben werden kann.

Des Weiteren wird vorgeschlagen, dass die Antriebseinheit der handgeführten Gartenbearbeitungsmaschine in einem Fahrbetrieb abhängig von zumindest einem Nutzungsverlaufsparameter gestoppt wird. Vorzugsweise wird die Antriebseinheit der handgeführten Gartenbearbeitungsmaschine in einem Fahrbetrieb bei Erfassung zumindest eines definierten Nutzungsverlaufs der Gartenbearbeitungsmaschine durch den Bediener gestoppt. Bevorzugt sind auf der Gartenbearbeitungsmaschine dazu mehrere Stoppverlaufsprofile hinterlegt. Die Stoppverlaufsprofile umfassen vorzugsweise verschiedene Kraftmuster, welche jeweils eine, insbesondere negative, Mindestkraft über verschiedene Messpunkte hinweg definieren. Die Stoppverlaufsprofile sind dabei insbesondere über Messfenster der Erfassungseinheit über eine definierte Zeit, insbesondere mit einer bestimmten Anzahl an Messpunkten, definiert, innerhalb welches eine bestimmte Anzahl an Messpunkten eine vorgegebene, insbesondere negative, Mindestkraft überschreiten muss. Vorzugsweise umfasst das Messfenster der Stoppverlaufsprofile jeweils zumindest acht Messpunkte, von denen mehr als sechs Messpunkte die vorgegebene, insbesondere negative, Mindestkraft überschreiten müssen. Die Antriebseinheit der handgeführten Gartenbearbeitungsmaschine wird in dem Fahrbetrieb daher vorzugsweise gestoppt, wenn zumindest ein Stoppverlaufsprofil erfüllt ist. Dadurch kann insbesondere ein schnelles Stoppen der Antriebseinheit gewährleistet werden. Insbesondere kann eine vorteilhaft intuitive und schnelle Reaktion der handgeführten Gartenbearbeitungsmaschine auf eine Krafteingabe des Bedieners erreicht werden. Auf der anderen Seite kann dadurch zuverlässig vermieden werden, dass die Antriebseinheit, beispielsweise aufgrund einer Bodenwelle, ungewollt gestoppt wird. Es können daher insbesondere Fehler durch Bodenwellen vermieden werden, da diese keine gleichmäßig hohe Krafteinwirkung über das Messfenster bewirken.

Es wird ferner vorgeschlagen, dass während eines Betriebs zwischen zumindest zwei Fahrbetriebsphasen automatisch eine Offset-Kalibrierung zumindest eines Sensors zumindest einer Erfassungseinheit der handgeführten Gartenbearbeitungsmaschine durchgeführt wird. Vorzugsweise wird in einem aktivierten Zustand der handgeführten Gartenbearbeitungsmaschine während einer Standphase der handgeführten Gartenbearbeitungsmaschine automatisch eine Offset-Kalibrierung des zumindest einen Sensors der zumindest einen Erfassungseinheit durchgeführt. Bevorzugt wird dazu in der Standphase ein Ausgabewert des zumindest einen Sensors der zumindest einen Erfassungseinheit erfasst und abhängig davon ein Offsetwert berechnet. Bei einer Abweichung des berechneten Offsetwerts von einem hinterlegten Offsetwert des zumindest einen Sensors der zumindest einen Erfassungseinheit, wird der hinterlegte Offsetwert insbesondere zumindest in Richtung des berechneten Offsetwerts korrigiert. Vorzugsweise kann der hinterlegte Offsetwert während einer Offset-Kalibrierung maximal um einen definierten Faktor korrigiert werden. Bevorzugt beträgt der definierte Faktor insbesondere weniger als 10% des hinterlegten Offsetwerts, vorzugsweise weniger als 5% des hinterlegten Offsetwerts und besonders bevorzugt weniger als 1% des hinterlegten Offsetwerts. Besonders bevorzugt beträgt der definierte Faktor insbesondere zumindest annähernd 0,5% des hinterlegten Offsetwerts. Hierdurch können Fehlmessungen bei der Offset-Kalibrierung vorteilhaft ausgeglichen und eine gleichmäßige Anpassung des Offsetwerts erreicht werden. Die Offset-Kalibrierung bildet daher insbesondere eine inkrementelle Methode über die Zeit, bei der Offset Kalibrierfehler aufgrund von Betriebsbedingungen, wie beispielsweise der Kalibrierung an einem Hang, insbesondere an einer steilen Böschung, sich nicht auf die Leistung der Kalibrierung auswirken. Dadurch kann insbesondere erreicht werden, dass sich die Gartenbearbeitungsmaschine immer in einer vorhersagbaren Weise verhält. Ferner kann dadurch ausgeglichen werden, dass sich der zumindest eine Sensor aufgrund der Änderung seines Offsets mit der Zeit allmählich aus der Kalibrierung bewegt. Ferner kann durch die automatische Kalibrierung eine manuelle Kalibrierung für den Bediener vermieden werden.

Es wird weiter vorgeschlagen, dass abhängig von einem Betriebszustand einer Mähwerkeinheit der Gartenbearbeitungsmaschine eine Maximalgeschwindigkeit der Antriebseinheit der handgeführten Gartenbearbeitungsmaschine angepasst wird. Vorzugsweise wird die Maximalgeschwindigkeit der Antriebseinheit der handgeführten Gartenbearbeitungsmaschine bei einer laufenden Mähwerkeinheit reduziert. Bei einer zu hohen Geschwindigkeit der Gartenbearbeitungsmaschine während des Mähens kann ein optimales Mähergebnis nicht mehr gewährleistet werden, da sowohl ein Grasschneiden und eine Grasaufnahme nicht mehr optimal funktionieren. Ist die Mähwerkeinheit dagegen deaktiviert, wird die Maximalgeschwindigkeit der Antriebseinheit der handgeführten Gartenbearbeitungsmaschine vorzugsweise wieder heraufgesetzt. Hierdurch kann ein maximaler Komfort für den Bediener bereitgestellt werden, ohne ein Mähergebnis zu beeinträchtigen. Es kann insbesondere erreicht werden, dass die Gartenbearbeitungsmaschine beispielsweise über Wege, Einfahrten oder Parkplätze vorteilhaft schnell angetrieben werden kann.

Es zeigen:
- Fig. 1: eine handgeführte Gartenbearbeitungsmaschine mit einer Grundeinheit, mit einer Führungseinheit und mit einer Erfassungseinheit in einer schematischen Seitenansicht,
- Fig. 2: die Führungseinheit und die Erfassungseinheit der handgeführten Gartenbearbeitungsmaschine in einer schematischen Darstellung,
- Fig. 3: die Führungseinheit und die Erfassungseinheit der handgeführten Gartenbearbeitungsmaschine in einer schematischen Explosionsdarstellung,
- Fig. 4: einen Teilausschnitt IV-IV der Führungseinheit und der Erfassungseinheit in einer schematischen Seitenansicht,
- Fig. 5: eine Befestigungseinheit der Führungseinheit der handgeführten Gartenbearbeitungsmaschine in einer schematischen Explosionsdarstellung,
- Fig. 6: ein schematisches Ablaufdiagramm eines Verfahrens zu einem Betrieb der handgeführten Gartenbearbeitungsmaschine,
- Fig. 7: einen Teilausschnitt einer Führungseinheit und einer Erfassungseinheit einer handgeführten Gartenbearbeitungsmaschine in einer schematischen Darstellung,
- Fig. 8: ein schematisches Ablaufdiagramm eines Verfahrens zu einem Betrieb einer alternativen handgeführten Gartenbearbeitungsmaschine,
- Fig. 9: ein schematisches Ablaufdiagramm eines Unterverfahrens zu einem Start einer Antriebseinheit der alternativen handgeführten Gartenbearbeitungsmaschine,
- Fig. 10: ein schematisches Ablaufdiagramm eines Unterverfahrens zu einem Stopp der Antriebseinheit der alternativen handgeführten Gartenbearbeitungsmaschine,
- Fig. 11: ein schematisches Ablaufdiagramm eines Unterverfahrens zu einer Offset-Kalibrierung einer Erfassungseinheit der alternativen handgeführten Gartenbearbeitungsmaschine,
- Fig. 12: einen schematischen Kalibrierungsaufbau zu einer Kalibrierung der Erfassungseinheit der alternativen handgeführten Gartenbearbeitungsmaschine ab Werk,
- Fig. 13: eine alternative handgeführte Gartenbearbeitungsmaschine mit einer Grundeinheit, mit einer Führungseinheit und mit einer Erfassungseinheit in einer schematischen Seitenansicht und
- Fig. 14: die Führungseinheit und die Erfassungseinheit der alternativen handgeführten Gartenbearbeitungsmaschine in einer schematischen Darstellung.

### Beschreibung der Ausführungsbeispiele

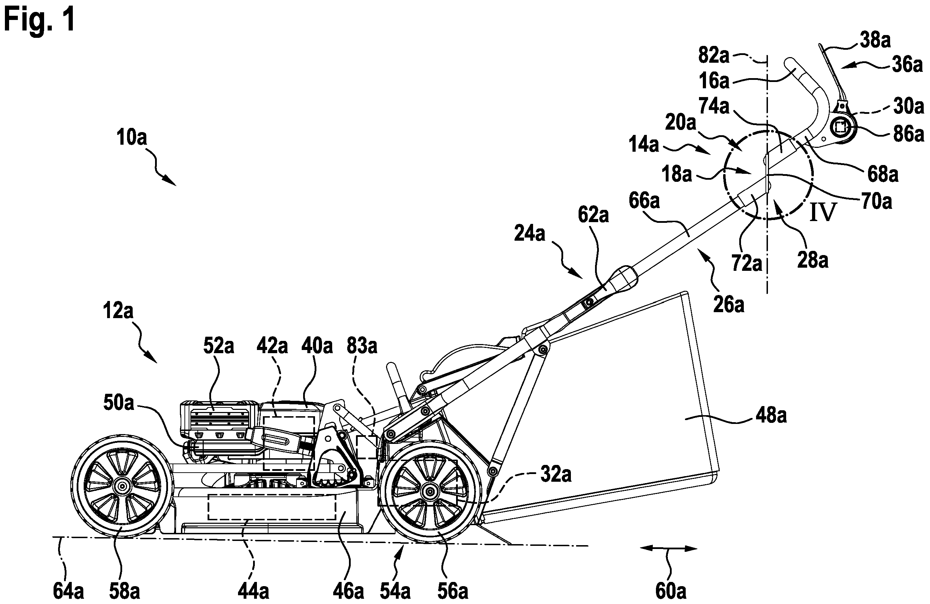

Figur 1 zeigt eine Gartenbearbeitungsmaschine 10a, die als Rasenmäher ausgebildet ist. Die Gartenbearbeitungsmaschine 10a ist hierbei als elektrisch betreibbarer Rasenmäher ausgebildet, der von einem Bediener vor sich her bewegbar ist. Somit ist die Gartenbearbeitungsmaschine 10a als sogenannter SchiebeRasenmäher ausgebildet. Grundsätzlich ist jedoch auch eine andere, einem Fachmann als sinnvoll erscheinende Ausbildung denkbar. Die Gartenbearbeitungsmaschine 10a weist eine Grundeinheit 12a auf. Die Grundeinheit 12a ist während eines Betriebs insbesondere dazu vorgesehen, direkt über eine zu bearbeitende Fläche geführt zu werden.

Die Gartenbearbeitungsmaschine 10a weist eine Antriebseinheit 42a auf. Die Grundeinheit 12a der Gartenbearbeitungsmaschine 10a weist die Antriebseinheit 42a auf. Die Antriebseinheit 42a ist von einem Elektromotor gebildet. Grundsätzlich wäre jedoch auch eine andere, einem Fachmann als sinnvoll erscheinende Ausbildung der Antriebseinheit 42a denkbar, wie beispielsweise als Verbrennungsmotor. Ferner umfasst die Gartenbearbeitungsmaschine 10a zumindest eine Motorgehäuseeinheit 40a zu einer Aufnahme und zu einer Lagerung der Antriebseinheit 42a der Gartenbearbeitungsmaschine 10a. Die Grundeinheit 12a weist die Motorgehäuseeinheit 40a auf. Ferner umfasst die Gartenbearbeitungsmaschine 10a zumindest eine, einem Fachmann bereits bekannte Mähwerkeinheit 44a zu einer Bearbeitung einer Arbeitsfläche, insbesondere einer Grünfläche. Die Grundeinheit 12a weist die Mähwerkeinheit 44a auf. Die Mähwerkeinheit 44a ist dazu vorgesehen, auf der Arbeitsfläche wachsendes Gras zu mähen. Hierzu ist die Mähwerkeinheit 44a von der Antriebseinheit 42a antreibbar. Die Mähwerkeinheit 44a kann hierbei direkt von der Antriebseinheit 42a antreibbar ausgebildet sein oder die Gartenbearbeitungsmaschine 10a umfasst zumindest eine nicht näher dargestellte Getriebeeinheit, die mit der Antriebseinheit 42a und der Mähwerkeinheit 44a zusammenwirkt, insbesondere antriebstechnisch mit der Antriebseinheit 42a und der Mähwerkeinheit 44a verbunden ist. Die Getriebeeinheit kann in einer separaten Getriebegehäuseeinheit der Gartenbearbeitungsmaschine 10a oder in der Motorgehäuseeinheit 40a angeordnet sein.

Die Gartenbearbeitungsmaschine 10a umfasst ferner eine Abtragabtransporteinheit 46a, die einen Schneidraum umfasst, in dem ein, einem Fachmann bereits bekanntes Mähwerkzeug der Mähwerkeinheit 44a zu einem Schneiden von Gras antreibbar angeordnet ist. Die Grundeinheit 12a weist die Abtragabtransporteinheit 46a auf. Die Mähwerkeinheit 44a ist somit im Schneidraum der Abtragabtransporteinheit 46a angeordnet. Der Schneidraum ist direkt angrenzend an eine Grasauswurföffnung der Abtragabtransporteinheit 46a angeordnet. Die Grasauswurföffnung mündet in eine abnehmbare Grasauffangvorrichtung 48a der Gartenbearbeitungsmaschine 10a zu einem Auffangen und/oder Sammeln von abgetragenem Grünschnitt, insbesondere von Gras. Die Grasauffangvorrichtung 48a ist an der Grundeinheit 12a der Gartenbearbeitungsmaschine 10a lösbar angeordnet.

Des Weiteren umfasst die Gartenbearbeitungsmaschine 10a zumindest eine Energiespeicherschnittstelle 50a zu einer lösbaren Verbindung mit zumindest einer Energiespeichereinheit 52a. Die Grundeinheit 12a weist die Energiespeicherschnittstelle 50a auf. Die Energiespeichereinheit 52a ist hierbei als Akkumulator ausgebildet. Die Energiespeicherschnittstelle 50a ist an der Motorgehäuseeinheit 40a angeordnet. Hierbei weist die Energiespeicherschnittstelle 50a zumindest zwei als Verbindungsführungsschienen ausgebildete nicht näher dargestellte Schnittstellenelemente auf, die eine, einem Fachmann bereits bekannte Ausgestaltung aufweisen. Zudem umfasst die Energiespeicherschnittstelle 50a zumindest zwei nicht näher dargestellte Kontaktelemente zu einer elektrischen Verbindung mit nicht näher dargestellten Gegenkontaktelementen der Energiespeichereinheit 52a. Die Energiespeicherschnittstelle 50a umfasst ferner zumindest ein nicht näher dargestelltes Fixierungselement, das dazu vorgesehen ist, die Energiespeichereinheit 52a zumindest in einem an der Energiespeicherschnittstelle 50a angeordneten Zustand mittels einer formschlüssigen und/oder kraftschlüssigen Verbindung zu befestigen.

In der in Figur 1 dargestellten Ausgestaltung der Gartenbearbeitungsmaschine 10a ist die Energiespeicherschnittstelle 50a dazu vorgesehen, insgesamt zumindest zwei Energiespeichereinheiten 52a lösbar aufzunehmen. Zu einer Verbindung der Energiespeichereinheiten 52a mit der Energiespeicherschnittstelle 50a sind die Energiespeichereinheiten 52a jeweils auf die Schnittstellenelemente aufschiebbar oder in die Schnittstellenelemente einschiebbar. Hierbei verläuft eine Verbindungsrichtung, entlang der die Energiespeichereinheiten 52a aufschiebbar oder einschiebbar sind, zumindest im Wesentlichen quer zu einer Rotationsachse der Antriebseinheit 42a. Insbesondere verläuft die Verbindungsrichtung zumindest im Wesentlichen senkrecht zur Rotationsachse der Antriebseinheit 42a. Es ist jedoch auch denkbar, dass die Verbindungsrichtung entlang einer anderen, einem Fachmann als sinnvoll erscheinenden Richtung verläuft, wie beispielsweise entlang einer zumindest im Wesentlichen parallel zur Rotationsachse der Antriebseinheit 42a verlaufenden Richtung.

Zu einer Bewegung der Gartenbearbeitungsmaschine 10a auf einer Arbeitsfläche, insbesondere einer Grünfläche, weist die Gartenbearbeitungsmaschine 10a zumindest eine Fahrwerkseinheit 54a auf. Die Fahrwerkseinheit 54a ist an der Grundeinheit 12a angeordnet. Die Fahrwerkseinheit 54a trägt die Grundeinheit 12a auf einem Untergrund. Die Fahrwerkseinheit 54a umfasst hierbei zumindest zwei Antriebsräder 56a (in Figur 1 ist lediglich eines der zwei Antriebsräder 56a sichtbar). Ferner weist die Gartenbearbeitungsmaschine 10a eine weitere Antriebseinheit 32a auf. Die Antriebseinheit 32a ist von einem Elektromotor gebildet. Die Antriebseinheit 32a ist zu einer Fortbewegung der Gartenbearbeitungsmaschine 10a vorgesehen. Die Antriebseinheit 32a ist zu einem Antrieb der Antriebsräder 56a vorgesehen. Die Antriebseinheit 32a ist dazu vorgesehen, während eines Betriebs eine Vorschubsunterstützung der Grundeinheit 12a bereitzustellen. Mittels der Vorschubsunterstützung der Grundeinheit 12a wird ein Bediener während eines Betriebs der Gartenbearbeitungsmaschine 10a bei einem Schieben der Gartenbearbeitungsmaschine 10a zumindest unterstützt. Es ist jedoch auch denkbar, dass die Gartenbearbeitungsmaschine 10a lediglich eine Antriebseinheit 32a, 42a aufweist, welche sowohl zu einem Antrieb der Mähwerkeinheit 44a als auch zu einem Antrieb der Antriebsräder 56a vorgesehen ist. Zudem ist es denkbar, dass die Gartenbearbeitungsmaschine 10a eine nicht näher dargestellte Antriebsgetriebeeinheit umfasst, mittels derer eine Antriebsdrehzahl und/oder ein Antriebsdrehmoment der Antriebsräder 56a einstellbar sind/ist. Ferner umfasst die Fahrwerkseinheit 54a zumindest ein unangetriebenes Rad 58a, insbesondere zumindest zwei unangetriebene Räder 58a, wovon lediglich eines dargestellt ist. Es ist jedoch auch denkbar, dass das Rad 58a, insbesondere die Räder 58a, ebenfalls mittels der Antriebseinheit 32a antreibbar ausgebildet sind.

Ferner weist die handgeführte Gartenbearbeitungsmaschine 10a eine Führungseinheit 14a auf. Die Führungseinheit 14a ist zu einer direkten Führung der Gartenbearbeitungsmaschine 10a vorgesehen. Mittels der Führungseinheit 14a wird die Gartenbearbeitungsmaschine 10a während eines Betriebs regulär bewegt, insbesondere geschoben. Die Führungseinheit 14a ist U-förmig ausgebildet, wobei die beiden Enden an der Grundeinheit 12a befestigt sind. Die Führungseinheit 14a weist einen Handgriff 16a auf. Der Handgriff 16a ist von einer Griffstange gebildet. Der Handgriff 16a ist teilweise bügelförmig ausgebildet. Der Handgriff 16a ist während eines Betriebs der Gartenbearbeitungsmaschine 10a zu einer Kontaktierung durch den Bediener vorgesehen. Der Handgriff 16a erstreckt sich im Wesentlichen senkrecht zu einer Haupterstreckungsrichtung 60a der Gartenbearbeitungsmaschine 10a. Eine Haupterstreckungsrichtung des Handgriffs 16a erstreckt sich senkrecht zu einer Haupterstreckungsrichtung 60a der Gartenbearbeitungsmaschine 10a. Die Haupterstreckungsrichtung 60a erstreckt sich im Wesentlichen parallel zu einer vorgesehenen Geradeausrichtung der Gartenbearbeitungsmaschine 10a. Der Handgriff 16a erstreckt sich parallel zu einer Standebene 64a der Gartenbearbeitungsmaschine 10a. Ferner weist die Führungseinheit 14a zwei Führungsstangen 26a, 26a' auf. Die Führungsstangen 26a, 26a' sind im Wesentlichen stangenförmig ausgebildet. Die Führungsstangen 26a, 26a' bestehen im Wesentlichen aus Rohren. Die Rohre weisen beispielhaft einen Durchmesser von 26 mm auf. Es sind verschiedene, einem Fachmann als sinnvoll erscheinende Materialien denkbar, wie beispielsweise ein Kohlefaserverbundwerkstoff, Kunststoff oder Metall. Die Führungsstangen 26a, 26a' schließen jeweils an den beiden gegenüberliegenden Enden des Handgriffs 16a an den Handgriff 16a an. Die Führungsstangen 26a, 26a' erstrecken sich im Wesentlichen senkrecht zu dem Handgriff 16a. Eine Haupterstreckungsrichtung der Führungsstangen 26a, 26a' erstreckt sich jeweils im Wesentlichen senkrecht zu der Haupterstreckungsrichtung des Handgriffs 16a. Die Führungsstangen 26a, 26a' erstrecken sich von dem Handgriff 16a zu der Grundeinheit 12a. Die Führungsstangen 26a, 26a' bilden jeweils an einem dem Handgriff 16a abgewandten Ende einen Anschlussbereich 24a zu der Grundeinheit 12a. In dem Anschlussbereich 24a sind die Führungsstangen 26a, 26a' in einem montierten Zustand der Führungseinheit 14a jeweils in Fixieraufnahmen 62a der Grundeinheit 12a eingeschoben und fixiert. Die Führungsstangen 26a sind in einem Winkel von mehr als 20°, vorzugsweise von mehr als 25° und bevorzugt von mehr als 30° gegenüber der Standebene 64a der Gartenbearbeitungsmaschine 10a abgewinkelt. Die Führungsstangen 26a weisen besonders bevorzugt einen Winkel von 34° gegenüber der Standebene 64a der Gartenbearbeitungsmaschine 10a auf.

Des Weiteren weist die Gartenbearbeitungsmaschine 10a eine Erfassungseinheit 18a auf. Die Erfassungseinheit 18a ist zu einer Erfassung einer von einem Bediener gewünschten Vorschubsunterstützung der Grundeinheit 12a vorgesehen. Die Erfassungseinheit 18a ist zu einer Erfassung einer von einem Bediener gewünschten Unterstützung bei einer Bewegung der handgeführten Gartenbearbeitungsmaschine 10a vorgesehen. Ferner ist die Erfassungseinheit 18a zu einer Erfassung einer Verformung zumindest eines Teilbereichs 20a, 20a' der Führungseinheit 14a vorgesehen. Die Erfassungseinheit 18a ist zu einer Erfassung einer Verformung von zwei zueinander beabstandeten Teilbereichen 20a, 20a' der Führungseinheit 14a vorgesehen. Die Erfassungseinheit 18a ist zu einer Erfassung einer Relativbewegung zwischen jeweils zwei gegenüberliegenden Enden der Teilbereiche 20a, 20a' der Führungseinheit 14a vorgesehen. Die Teilbereiche 20a, 20a' bilden jeweils einen Teil der Führungsstangen 26a, 26a'. Ein erster Teilbereich 20a bildet einen Teil der ersten Führungsstange 26a. Ein zweiter Teilbereich 20a' bildet einen Teil der zweiten Führungsstange 26a'. Die Teilbereiche 20a, 20a' der Führungseinheit 14a weisen gegenüber einem angrenzenden Bereich der Führungseinheit 14a eine geringere, insbesondere wesentlich geringere Biegesteifigkeit auf. Die Teilbereiche 20a, 20a' der Führungseinheit 14a weisen gegenüber einem angrenzenden Bereich der Führungsstangen 26a, 26a' eine geringere, insbesondere wesentlich geringere, Biegesteifigkeit auf. Die Führungsstangen 26a, 26a' weisen jeweils einen Versatz 28a, 28a' auf, welcher jeweils in einem der Teilbereiche 20a, 20a' liegt. Die Teilbereiche 20a, 20a' sind jeweils von den Versätzen 28a, 28a' gebildet. Die Führungsstangen 26a, 26a' weisen an den Versätzen 28a, 28a' jeweils zwei parallel zueinander verlaufende Teilstangen 66a, 66a', 68a, 68a' auf, die versetzt zueinander angeordnet sind. Die Teilstangen 66a, 66a', 68a, 68a' derselben Führungsstange 26a, 26a' sind jeweils an den einander zugewandten Enden über ein Verbindungselement 70a, 70a' verbunden. Die Verbindungselemente 70a, 70a' sind jeweils von einer Verbindungsplatte gebildet. Die Teilstangen 66a, 66a', 68a, 68a' sind jeweils über eine Befestigungseinheit 72a, 72a', 74a, 74a' mit dem zugehörigen Verbindungselement 70a, 70a verbunden. Die Befestigungseinheiten 72a, 72a', 74a, 74a' sind jeweils auf den einander zugewandten Enden der Teilstangen 66a, 66a', 68a, 68a' angeordnet. Die Befestigungseinheiten 72a, 72a', 74a, 74a' sind jeweils auf die Enden der Teilstangen 66a, 66a', 68a, 68a' aufgesteckt und mit diesen verschraubt. Die Befestigungseinheiten 72a, 72a', 74a, 74a' sind identisch ausgebildet. Die Befestigungseinheiten 72a, 72a', 74a, 74a' weisen jeweils zwei Halbschalen 76a, 78a auf, die in einem verbundenen Zustand eine Hülse zur Aufnahme eines Endes einer der Teilstangen 66a, 66a', 68a, 68a' bilden. In einem montierten Zustand sind die Halbschalen 76a, 78a durch Öffnungen in einer zugehörigen Teilstange 66a, 66a', 68a, 68a' miteinander verschraubt und mit der zugehörigen Teilstange 66a, 66a', 68a, 68a' verbunden. Ferner bilden die Halbschalen 76a, 78a gemeinsam einen Aufnahmebereich zur Aufnahme einer Mutter 80a aus. Die Befestigungseinheiten 72a, 72a', 74a, 74a' weisen jeweils eine Mutter 80a auf, die in einem montierten Zustand positions- und drehfest in dem Aufnahmebereich der Halbschalen 76a, 78a angeordnet ist. Eine Gewindeachse der Mutter 80a ist in einem montierten Zustand, jeweils gegenüber einer Haupterstreckungsrichtung der zugehörigen Teilstange 66a, 66a', 68a, 68a' abgewinkelt. Eine Gewindeachse der Mutter 80a erstreckt sich parallel zu der Standebene 64 der Gartenbearbeitungsmaschine 10a. Über die Muttern 80a sind die Verbindungselemente 70a, 70a' jeweils mit den Befestigungseinheiten 72a, 72a', 74a, 74a' verbunden. Hierzu weisen die Verbindungselemente 70a, 70a' jeweils zwei Ausnehmungen auf, über welche die Verbindungselemente 70a, 70a' jeweils mit einer der Befestigungseinheiten 72a, 72a', 74a, 74a' verschraubt sind. Eine Haupterstreckungsebene 82a der Verbindungselemente 70a, 70a' erstreckt sich jeweils senkrecht zu der Standebene 64 der Gartenbearbeitungsmaschine 10a. Die Verbindungselemente 70a, 70a' weisen gegenüber den Teilstangen 66a, 66a', 68a, 68a' eine geringere, insbesondere wesentlich geringere, Biegesteifigkeit auf. Die geringere Biegesteifigkeit der Verbindungselemente 70a, 70a' resultiert dabei aus einer geringeren Materialstärke sowie einer geringeren Steifigkeit des Querschnitts. Grundsätzlich wäre jedoch auch denkbar, dass eine Biegesteifigkeit zusätzlich durch ein gewähltes Material beeinflusst werden kann.

Die Erfassungseinheit 18a weist zumindest einen Sensor 22a, 22a' auf. Die Erfassungseinheit 18a weist zumindest einen elektrischen Sensor 22a, 22a' auf. Die Erfassungseinheit 18a weist zwei Sensoren 22a, 22a' auf. Durch die Verwendung von zwei Sensoren 22a, 22a' kann insbesondere ermöglicht werden, dass eine auf die Führungseinheit 14a wirkende Kraft vollständig erfasst werden kann. Hierdurch kann insbesondere eine Zuverlässige Erfassung auch dann gewährleistet werden, wenn ein Bediener den Handgriff 16a dezentral führt. Ferner können dadurch auch Kurvenfahren mit teilweise entgegengesetzten Kraftrichtungen des Bedieners zuverlässig erfasst werden. Die Sensoren 22a, 22a' sind jeweils von einem elektrischen Sensor gebildet. Die Sensoren 22a, 22a' sind zu einer Erfassung einer Verformung der zwei zueinander beabstandeten Teilbereiche 20a, 20a' der Führungseinheit 14a vorgesehen. Die Sensoren 22a, 22a' sind jeweils zu einer Erfassung einer Verformung einer der beiden Teilbereiche 20a, 20a' der Führungseinheit 14a vorgesehen. Ferner sind die Sensoren 22a, 22a' in einem Mittelbereich der Führungseinheit 14a zwischen dem Handgriff 16a und dem Anschlussbereich 24a zu der Grundeinheit 12a angeordnet. Die Sensoren 22a, 22a' sind an den Führungsstangen 26a, 26a' der Führungseinheit 14a angeordnet. Die Sensoren 22a, 22a' sind jeweils an einem der Versatze 28a, 28a'der Führungseinheit 14a angeordnet. Die Erfassungseinheit 18a weist daher zwei Sensoren 22a, 22a' auf, die in einem Bereich der Versätze 28a, 28a' angeordnet sind. An jedem der Versätze 28a, 28a' der Führungseinheit 14a ist einer der beiden Sensoren 22a, 22a' angeordnet. Die Sensoren 22a, 22a' sind jeweils an einem der Verbindungselemente 70a, 70a' angeordnet. Die Sensoren 22a, 22a' sind teilweise in die Verbindungselemente 70a, 70a' integriert ausgeführt. Grundsätzlich wäre auch denkbar, dass die Sensoren 22a, 22a' jeweils vollständig in jeweils eines der Verbindungselemente 70a, 70a' integriert ausgeführt sind. Die Sensoren 22a, 22a' sind nicht weiter sichtbar, in einem Gehäuse mit einer Gummidichtung angeordnet. Hierdurch kann ein Endringen von Staub oder Wasser verhindert werden. Grundsätzlich wäre jedoch auch eine Anordnung der Sensoren 22a, 22a' ohne den Versatz 28a, 28a' denkbar. Eine integrierte Anordnung der Sensoren 22a, 22a' ohne den Versatz 28a, 28a' ist grundsätzlich ebenfalls möglich, jedoch mit höheren Kosten verbunden.

Die elektrischen Sensoren 22a, 22a' der Erfassungseinheit 18a sind jeweils von einem Dehnungsmessstreifen gebildet. Grundsätzlich ist jedoch auch denkbar, dass die Sensoren 22a, 22a' jeweils mehrere Dehnungsmesstreifen umfassen. Beispielsweise wäre denkbar, dass die Sensoren 22a, 22a' jeweils von einer Brückenschaltung mit mehreren Dehnungsmesstreifen gebildet ist. Hierbei sind beispielsweise Viertel-, Halb- und die Vollbrücke mit insbesondere einem, zwei oder vier Dehnungsmesstreifen denkbar. Mit der Verwendung einer Vollbrücke kann insbesondere die höchste Empfindlichkeit bei einer gleichzeitig vorteilhaften Umweltkompensation, insbesondere für Temperatur, bereitgestellt werden. Bei den Sensoren 22a, 22a' muss ferner ein identischer Nullpunkt sichergestellt werden. Dazu ist insbesondere eine einfache Bedienung durch einen Bediener sinnvoll. Daher kann bei Sensoren 22a, 22a' mit einer entsprechenden Umweltkompensation eine vorteilhaft optimale Benutzerschnittstelle bereitgestellt werden.

Grundsätzlich ist jedoch auch eine andere Anordnung der Sensoren 22a, 22a' denkbar. Beispielsweise wäre denkbar, dass auf dem Handgriff 16a ein Controller befestigt ist, an dessen Joystick die Sensoren 22a, 22a' angebracht sind. Mittels einer Elektronik könnten hierbei die Bewegungen des Joysticks in alle Richtungen überwacht werden. Über separat ansteuerbare Antriebsräder 56a könnten damit die Richtung und die Geschwindigkeit der handgeführten Gartenbearbeitungsmaschine 10a kontrolliert werden.

Ferner ist die Erfassungseinheit 18a zu einer Erfassung einer Kenngröße einer mechanischen Spannung in den Teilbereichen 20a, 20a' der Führungseinheit 14a vorgesehen. Die Erfassungseinheit 18a ist zu einer Erfassung einer Kenngröße der Verformung der Teilbereiche 20a, 20a' der Führungseinheit 14a vorgesehen. Mittels der Sensoren 22a, 22a' wird jeweils getrennt voneinander jeweils eine Kenngröße einer Verformung in den Teilbereichen 20a, 20a' der Führungseinheit 14a erfasst. Die Erfassungseinheit 18a ist zu einer Erfassung einer Richtung einer mechanischen Spannung in den Teilbereichen 20a, 20a' der Führungseinheit 14a vorgesehen. Die Erfassungseinheit 18a erfasst dabei sowohl eine Richtung als auch eine Stärke der Verformung der Teilbereiche 20a, 20a' der Führungseinheit 14a. Bei einer Richtung wird lediglich zwischen zwei Richtungen unterschieden. Eine Richtung der Verformung der Teilbereiche 20a, 20a' der Führungseinheit 14a wird dabei durch ein Vorzeichen der Stärke der Verformung bestimmt.

Des Weiteren weist die handgeführte Gartenbearbeitungsmaschine 10a eine Recheneinheit 30a auf. Die Recheneinheit 30a ist, zu einer Ansteuerung der Antriebseinheit 32a, zu einer Auswertung von Sensordaten der Erfassungseinheit 18a sowie zu einer Auswertung einer aktuellen Betriebskenngröße der handgeführten Gartenbearbeitungsmaschine 10a vorgesehen. Die Recheneinheit 30a ist, zu einer Ansteuerung der als Unterstützungsantrieb ausgebildeten Antriebseinheit 32a zur Fortbewegung der handgeführten Gartenbearbeitungsmaschine 10a, zu einer Auswertung von Sensordaten der Erfassungseinheit 18a sowie zu einer Auswertung einer aktuellen Betriebskenngröße der handgeführten Gartenbearbeitungsmaschine 10a vorgesehen. Die Recheneinheit 30a umfasst dazu eine Sensorelektronik zu einer Auswertung der Sensordaten der Erfassungseinheit 18a sowie eine Geschwindigkeitssteuerelektronik zu einer Ansteuerung der Antriebseinheit 32a. Die Recheneinheit 30a ist dazu vorgesehen, abhängig von einer erfassten Verformung der Teilbereiche 20a, 20a' der Führungseinheit 14a sowie abhängig von einer erfassten, aktuellen Betriebskenngröße der handgeführten Gartenbearbeitungsmaschine 10a die als Unterstützungsantrieb ausgebildete Antriebseinheit 32a der handgeführten Gartenbearbeitungsmaschine 10a anzusteuern. Die Recheneinheit 30a ist dabei dazu vorgesehen, aus einer erfassten Verformung der Teilbereiche 20a, 20a' der Führungseinheit 14a sowie aus einer erfassten aktuellen Betriebskenngröße der handgeführten Gartenbearbeitungsmaschine 10a auf eine von einem Bediener gewünschte Vorschubsunterstützung zu schließen. Die Recheneinheit 30a ist dazu mit den Sensoren 22a, 22a' verbunden. Die Recheneinheit 30a ist nicht weiter sichtbar über Kabel mit den Sensoren 22a, 22a' verbunden. Grundsätzlich wäre jedoch auch eine Verbindung über Funk denkbar. Ferner ist die Recheneinheit 30a nicht weiter sichtbar über Kabel mit der Antriebseinheit 32a verbunden. Grundsätzlich wäre jedoch auch eine über eine Funkverbindung denkbar. Die Recheneinheit 30a addiert während eines Betriebs die durch die Sensoren 22a, 22a' erfassten Kräfte und steuert entsprechend die Antriebseinheit 32a zur Fortbewegung der handgeführten Gartenbearbeitungsmaschine 10a an. Ferner ist die Recheneinheit 30a dabei dazu vorgesehen, aus einer erfassten Verformung sowie aus einer erfassten aktuellen Betriebskenngröße, auf eine von einem Bediener benötigte Unterstützung zur Erleichterung eines aktuellen Schiebevorgangs zu schließen. Die Recheneinheit 30a ist in einer Querstange 84a der Führungseinheit 14a angeordnet. Dadurch kann eine Störung der Recheneinheit 30a durch die Grundeinheit 12a der handgeführten Gartenbearbeitungsmaschine 10a vermieden werden. Grundsätzlich wäre jedoch auch eine andere, einem Fachmann als sinnvoll erscheinende Anordnung denkbar. Um eine optimale Bedienerempfindung zu erreichen muss ein Firmware-Regelalgorithmen der Recheneinheit 30a eine Verarbeitung der gemessenen Kraft und einer anschließenden Ansteuerung der Antriebseinheit 32a zur Fortbewegung der handgeführten Gartenbearbeitungsmaschine 10a bereitstellen, die im Wesentlichen den Erwartungen des Bedieners entspricht. Hierfür wird ein ADR-Algorithmus (Attack, Decay and Release) bereitgestellt. Die Steuerung der Anstiegsrate (Attack) gewährleistet, dass die handgeführte Gartenbearbeitungsmaschine 10a eine gewünschte Geschwindigkeit so schnell wie möglich erreicht. Eine langsamere Abfallrate (Decay) gewährleistet, dass die Geschwindigkeit über unebenes Gelände relativ konstant bleibt. Eine Freigabeerfassung (Release) erlaubt der Firmware zu erkennen, wenn der Bediener die handgeführte Gartenbearbeitungsmaschine 10a zurückzieht und entsprechend die Antriebseinheit 32a zu deaktivieren. Dadurch kann die handgeführte Gartenbearbeitungsmaschine 10a gestoppt werden, ohne ein Betätigungselement 38a loslassen zu müssen.

Zudem weist die handgeführte Gartenbearbeitungsmaschine 10a eine weitere Recheneinheit 83a auf, welche zu einer Ansteuerung der Antriebseinheit 42a für die Mähwerkeinheit 44a vorgesehen ist. Die weitere Recheneinheit 83a ist nicht weiter sichtbar über Kabel mit der Recheneinheit 30a verbunden. Grundsätzlich wäre jedoch auch eine über eine Funkverbindung denkbar. Die weitere Recheneinheit 83a ist in der Grundeinheit 12a der handgeführten Gartenbearbeitungsmaschine 10a angeordnet.

Ferner weist die handgeführte Gartenbearbeitungsmaschine 10a ein Einstellelement 34a auf. Das Einstellelement 34a ist von einer Drehhülse, insbesondere einem Drehgriff, gebildet. Hierbei ist das Einstellelement 34a motorradhandgriffartig ausgebildet. Das Einstellelement 34a ist drehbar an einer Querstange 84a der Führungseinheit 14a angeordnet. Die Querstange 84a erstreckt sich parallel zu dem Handgriff 16a. Die Querstange 84a ist in einem Übergangsbereich zwischen dem Handgriff 16a und den Führungsstangen 26a, 26a' angeordnet. Die Querstange 84a ist an den dem Handgriff 16a zugewandten Enden der Führungsstangen 26a, 26a' mit den Führungsstangen 26a, 26a' verbunden. Das Einstellelement 34a ist zu einer Einstellung einer Sensitivität der Erfassungseinheit 18a vorgesehen. Das Einstellelement 34a ist zu einer Einstellung eines Faktors vorgesehen, mit welchem die Verformung der Teilbereiche 20a, 20a' der Führungseinheit 14a für eine Berechnung einer Vorschubsunterstützung berücksichtigt wird. Das Einstellelement 34a ist als ein Schwellwertgeber zur Einstellung der Sensitivität der Sensoren 22a, 22a' ausgebildet. Das Einstellelement 34a dient einem Bediener dazu, einen Faktor einzugeben, über welchen sein Gewicht und/oder seine Kraft und/oder sein gewünschter Unterstützungsgrad berücksichtigt wird. Dazu können an dem Einstellelement 34a verschiedene Stufen eingestellt werden. Das Einstellelement 34a ist elektrisch ausgebildet. Eine Einstellung des Einstellelements 34a wird nicht weiter sichtbar über Leitungen an die Recheneinheit 30a übertragen.

Die handgeführte Gartenbearbeitungsmaschine 10a weist ferner eine an der Führungseinheit 14a angeordnete Betätigungseinheit 36a auf. Die Betätigungseinheit 36a ist in einem Übergangsbereich zwischen dem Handgriff 16a und den Führungsstangen 26a, 26a' angeordnet. Die Betätigungseinheit 36a ist an der Querstange 84a angeordnet. Die Betätigungseinheit 36a umfasst ein beweglich gelagertes Betätigungselement 38a. Das Betätigungselement 38a ist beweglich an der Querstange 84a gelagert. Das Betätigungselement 38a ist bügelförmig ausgebildet. Das Betätigungselement 38a erstreckt sich im Wesentlichen parallel zu dem Handgriff 16a. Eine Form des Betätigungselements 38a entspricht im Wesentlichen einer Form des Handgriffs 16a. Zu einer Betätigung des Betätigungselements 38a wird das Betätigungselement 38a in Richtung des Handgriffs 16a verschwenkt, bis das Betätigungselement 38a an dem Handgriff 16a anliegt. Das Betätigungselement 38a ist zu einer Aktivierung eines Stand-by-Betriebszustands 90a, 92a vorgesehen. Das Betätigungselement 38a aktiviert in einem betätigten Zustand den Stand-by-Betriebszustand 90a, 92a der handgeführte Gartenbearbeitungsmaschine 10a. Das Betätigungselement 38a aktiviert in einem betätigten Zustand den Stand-by-Betriebszustand 90a der Vorschubunterstützung, insbesondere der Antriebseinheit 32a der Vorschubunterstützung. Des Weiteren aktiviert das Betätigungselement 38a in einem betätigten Zustand den Stand-by-Betriebszustand 92a der Antriebseinheit 42a für die Mähwerkeinheit 44a. Das Betätigungselement 38a muss zu einem Halten des Stand-by-Betriebszustands 90a, 92a in einem betätigten Zustand gehalten werden. Hierdurch kann insbesondere ein Betätigungselement 38a bereitgestellt werden, welches eine zusätzliche Bediensicherheit bereitstellt. Ferner weist die Betätigungseinheit 36a ein zweites Betätigungselement 86a auf. Das zweite Betätigungselement 86a ist an einer Stirnseite der Querstange 84a angeordnet. Das zweite Betätigungselement 86a ist von einem Knopf gebildet, welcher zu einer Betätigung gedrückt werden muss. Das zweite Betätigungselement 86a ist zu einer Aktivierung und/oder Deaktivierung der Mähwerkeinheit 44a und der zugehörigen Antriebseinheit 42a vorgesehen. Durch eine Betätigung des zweiten Betätigungselements 86a wird die Antriebseinheit 42a aktiviert bzw., wenn die Antriebseinheit 42a bereits aktiviert ist, deaktiviert. Das zweite Betätigungselement 86a kann nur betätigt werden, wenn das Betätigungselement 38a bereits betätigt wurde.

Grundsätzlich könnte bei der Verwendung eines Force Sensing Resistor als Sensoren 22a, 22a' auf das Betätigungselement 38a verzichtet werden. Ein Force Sensing Resistor weist gegenüber anderen Sensoren den Vorteil auf, dass dieser dazu genutzt werden kann, eine Elektronik durch Druckeinwirkung auf den Sensor zu aktivieren.

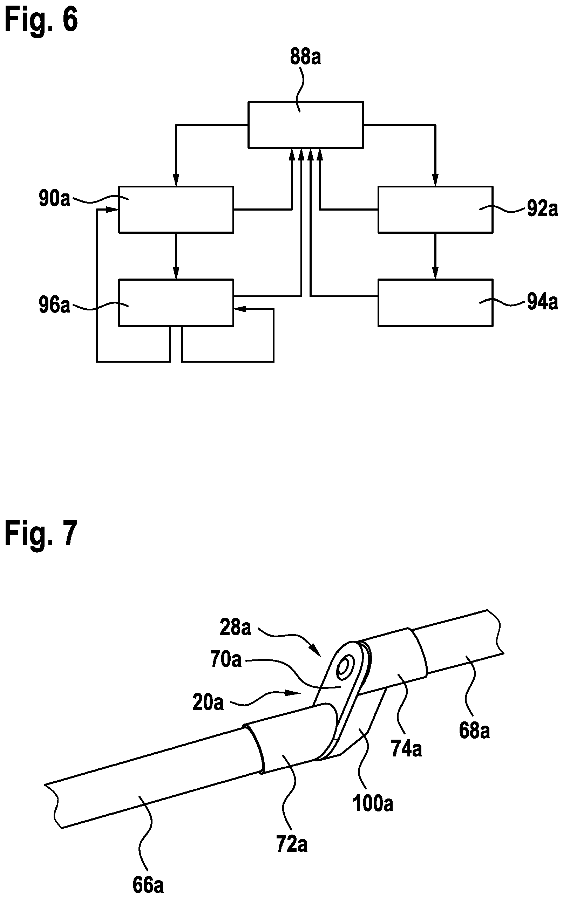

Figur 6 zeigt ein schematisches Ablaufdiagramm eines Verfahrens zu einem Betrieb der handgeführten Gartenbearbeitungsmaschine 10a. In einem ersten Zustand 88a der handgeführten Gartenbearbeitungsmaschine 10a sind die Antriebseinheit 32a der Vorschubunterstützung und die Antriebseinheit 42a für die Mähwerkeinheit 44a vollständig deaktiviert. Wird nun das Betätigungselement 38a der Betätigungseinheit 36a betätigt, also insbesondere gegen den Handgriff 16a gedrückt, wird die Antriebseinheit 32a der Vorschubunterstützung in einen Stand-by-Betriebszustand 90a versetzt. Daher wird ein Fahrunterstützungsmodus durch Betätigung des Betätigungselements 38a der Betätigungseinheit 36a der handgeführten Gartenbearbeitungsmaschine 10a in einen Stand-by-Betriebszustand 90a, 92a versetzt. Ferner wird durch die Betätigung des Betätigungselements 38a der Betätigungseinheit 36a die Antriebseinheit 42a für die Mähwerkeinheit 44a in einen Stand-by-Betriebszustand 92a versetzt. Befindet sich die Antriebseinheit 42a für die Mähwerkeinheit 44a in dem Stand-by-Betriebszustand 92a und wird das zweite Betätigungselement 86a betätigt, wird die Antriebseinheit 42a in einen aktivierten Zustand 94a versetzt. Durch erneutes Betätigen des zweiten Betätigungselements 86a wird die Antriebseinheit 42a für die Mähwerkeinheit 44a wieder deaktiviert. Dadurch können beispielsweise Flächen überfahren werden, die nicht gemäht werden sollen. Befindet sich die Antriebseinheit 32a der Vorschubunterstützung in dem Stand-by-Betriebszustand 90a und wird die handgeführte Gartenbearbeitungsmaschine 10a über den Handgriff 16a derart geschoben, dass eine erfasste Verformung der Verbindungselemente 70a, 70a' eine vorgegebene Schwelle überscheitet, wird die Antriebseinheit 32a aktiviert. Während eines Betriebs der Antriebseinheit 32a wird in einem Schritt 96 kontinuierlich eine auf die Verbindungselemente 70a, 70a' wirkende Kraft überwacht. Dabei wird die Antriebseinheit 32a der handgeführten Gartenbearbeitungsmaschine 10a abhängig von einer Verformung der Teilbereiche 20a, 20a' der Führungseinheit 14a der handgeführten Gartenbearbeitungsmaschine 10a angesteuert. Die Antriebseinheit 32a der handgeführten Gartenbearbeitungsmaschine 10a wird abhängig von einem Wert einer erfassten Verformung der Teilbereiche 20a, 20a' der Führungseinheit 14a angesteuert. Abhängig von der durch die Sensoren 22a, 22a' erfassten Verformung wird eine Geschwindigkeit der handgeführten Gartenbearbeitungsmaschine 10a gesteuert. Ferner kann abhängig von der durch die Sensoren 22a, 22a' erfasste Verformung eine Bremsung eingeleitet werden. Zu einer Bremsung kann ein Bediener an dem Handgriff 16a ziehen, sodass von den Sensoren 22a, 22a' eine negative Verformung erfasst wird. Sinkt die erfasste Verformung der Verbindungselemente 70a, 70a' unter die vorgegebene Schwelle, wird die Antriebseinheit 32a der Vorschubunterstützung wieder in den Stand-by-Betriebszustands 90a versetzt. Durch die Anordnung der Sensoren 22a, 22a' kann zudem gewährleistet werden, dass die Antriebseinheit 32a der Vorschubunterstützung wieder in den Stand-by-Betriebszustand 90a versetzt wird, wenn ein Bediener beispielsweise zu einem schnellen Wenden die vorderen Räder 58a der handgeführten Gartenbearbeitungsmaschine 10a anhebt. Dies wird von den Sensoren 22a, 22a' als eine negative Verformung erfasst, sodass die Verformung unterhalb der Schwelle liegt. Es kann daher verhindert werden, dass die Antriebseinheit 32a in diesem Zustand aktiviert wird. Es kann eine hohe Sicherheit gewährleistet werden. Wird während des Betriebs das Betätigungselement 38a der Betätigungseinheit 36a losgelassen, wird die handgeführte Gartenbearbeitungsmaschine 10a in den ersten Zustand 88a versetzt, in welchem die Antriebseinheit 32a der Vorschubunterstützung und die Antriebseinheit 42a für die Mähwerkeinheit 44a vollständig deaktiviert sind.

Zudem wäre denkbar, dass während des Schritts 96 kontinuierlich jeweils eine von den Sensoren 22a, 22a' erfasste Verformung separat überwacht wird. Dabei wäre insbesondere denkbar, dass in dem Schritt 96 erfasst wird, ob von dem Bediener eine Kurve gefahren wird, also einer der Sensoren 22a, 22a' eine größere Verformung erfasst als der andere. Dies könnte beispielsweise von der Recheneinheit 30a erfasst werden, welche wiederum jedes der beiden Antriebsräder 56a individuell ansteuern könnte. Die separate Ansteuerung der Antriebsräder 56a kann beispielsweise über ein Getriebe oder eine Aufteilung der Antriebseinheit 32a in jeweils eine Antriebseinheit pro Antriebsräder 56a erfolgen.

Ferner kann ein Nullabgleichsverfahren zu einer Kalibrierung der Sensoren 22a, 22a' beispielsweise derart erfolgen, dass das Betätigungselement 38a mehrmals aufeinanderfolgend mit einer definierten Anzahl sowie in einem definierten Zeitraum geöffnet und geschlossen wird. Nach einer kurzen Verzögerung erfolgt selbsttätig ein Einlesen eines aktuellen Nullpunkts der Sensoren 22a, 22a' sowie ein Einpflegen der Messwerte in eine Geschwindigkeitssteuerungssoftware der Recheneinheit 30a.

Grundsätzlich kann zudem auch ein Verfahren zum Einstellen der Verstärkung für jeden der Sensoren 22a, 22a' in der Geschwindigkeitssteuerungssoftware notwendig sein, um eine optimale Ansteuerung zu erreichen, wenn ein automatisch eingestellter Wert nicht ausreicht. Hierfür können Kräfte mit entsprechenden Werten für eine Kalibrierung mit Gewichten und Umlenkrollen auf die Führungseinheit 14a aufgebracht werden. Die resultierenden Werte der Sensoren 22a, 22a' werden anschließend verwendet, um optimale Verstärkungswerte zu berechnen und in der Geschwindigkeitssteuerungssoftware der Recheneinheit 30a zu hinterlegen.

Zudem oder alternativ zeigt Figur 7 eine zusätzliche Abdeckung 100a zu einem Schutz der Sensoren 22a, 22a'. Figur 7 zeigt lediglich eine Abdeckung 100a, wobei insbesondere je eine Abdeckung 100a pro Sensor 22a, 22a' vorgesehen ist. Die Abdeckungen 100a sind jeweils auf einer Rückseite der Verbindungselemente 70a, 70a' angeordnet. Die Abdeckungen 100a sind jeweils zu einem Schutz der Sensoren 22a, 22a' vor mechanischen Beschädigungen oder Wasserschäden vorgesehen. Zudem sorgen die Abdeckungen 100a auch für zusätzliche Zugentlastung, wenn ein zu den Sensoren 22a, 22a' führendes Kabel gezogen wird. Die Abdeckungen 100a sind jeweils von einer Plastikkappe gebildet, welche mit dem jeweiligen Verbindungselement 70a, 70a' verschraubt sind.

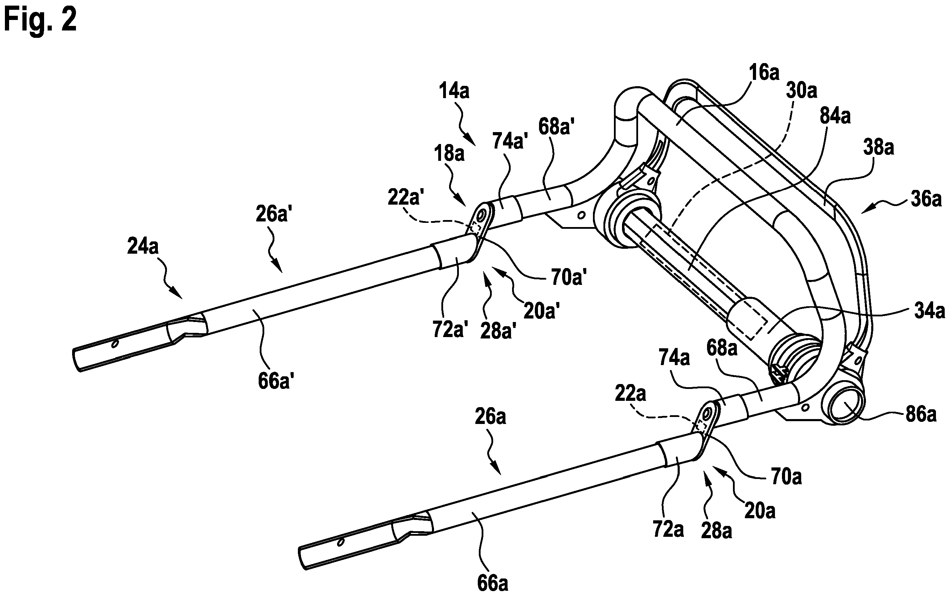

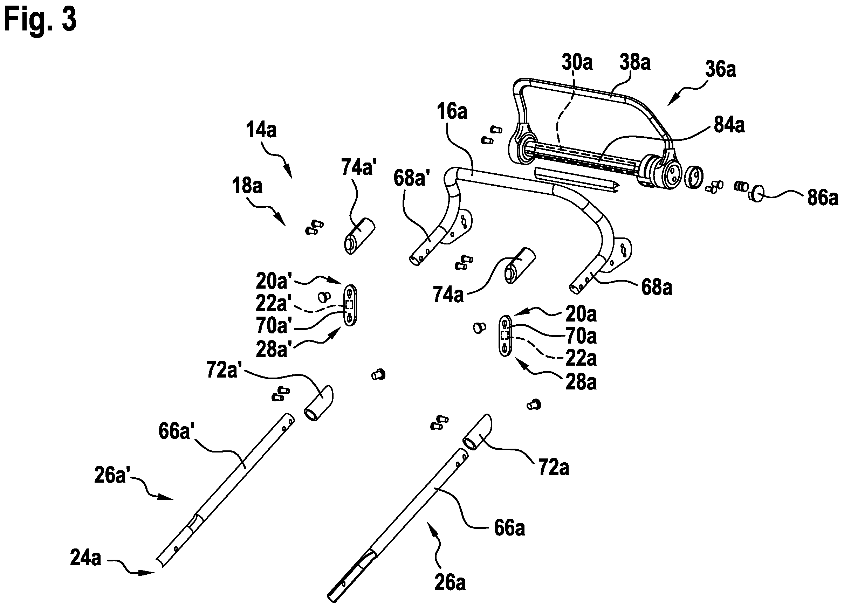

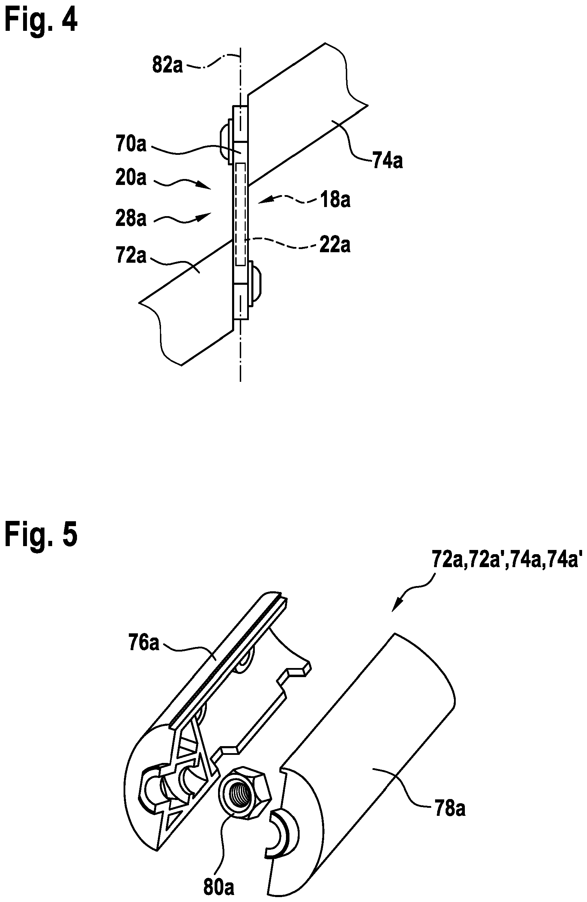

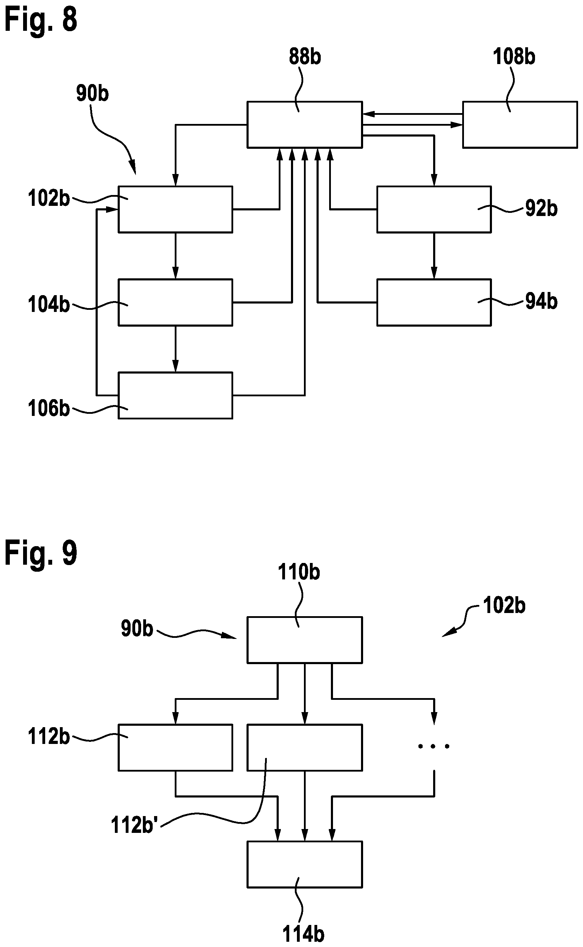

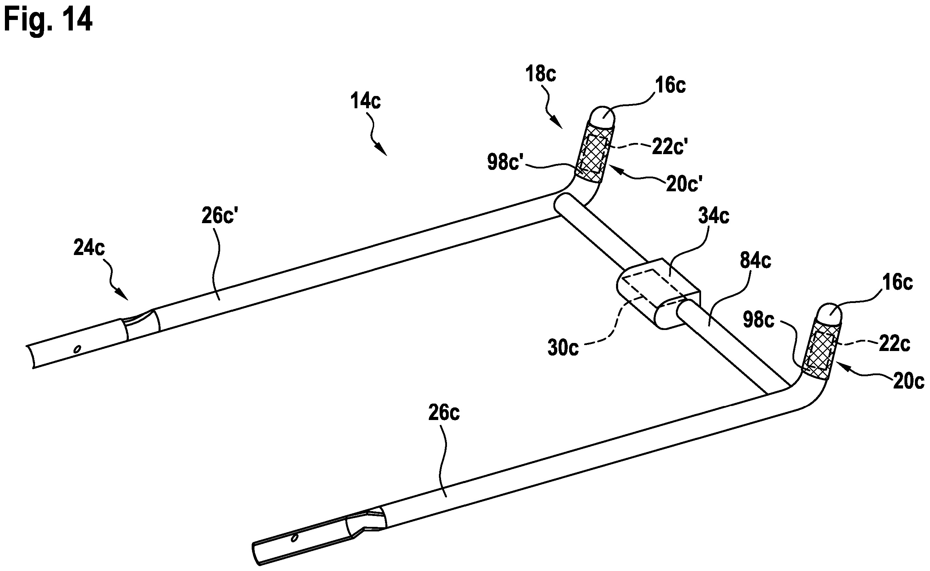

In den Figuren 8 bis 14 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des ersten Ausführungsbeispiels, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In den Ausführungsbeispielen der Figuren 8 bis 14 ist der Buchstabe a durch die Buchstaben b und c ersetzt.

Figur 8 zeigt ein schematisches Ablaufdiagramm eines Verfahrens zu einem Betrieb einer alternativen handgeführten Gartenbearbeitungsmaschine 10b. In einem ersten Zustand 88b der handgeführten Gartenbearbeitungsmaschine 10b sind eine Antriebseinheit der Vorschubunterstützung und eine Antriebseinheit für die Mähwerkeinheit vollständig deaktiviert. Wird nun ein Betätigungselement 38b einer Betätigungseinheit 36b betätigt, also insbesondere gegen einen Handgriff 16b gedrückt, wird die Antriebseinheit der Vorschubunterstützung in einen Stand-by-Betriebszustand 90b versetzt. Daher wird ein Fahrunterstützungsmodus durch Betätigung des Betätigungselements 38b der Betätigungseinheit 36b der handgeführten Gartenbearbeitungsmaschine in einen Stand-by-Betriebszustand 90b, 92b versetzt. Ferner wird durch die Betätigung des Betätigungselements 38b der Betätigungseinheit 36b die Antriebseinheit für die Mähwerkeinheit in einen Stand-by-Betriebszustand 92b versetzt. Befindet sich die Antriebseinheit für die Mähwerkeinheit in dem Stand-by-Betriebszustand 92b und wird ein zweites Betätigungselement 38b betätigt, wird die Antriebseinheit in einen aktivierten Zustand versetzt. Befindet sich die Antriebseinheit der Vorschubunterstützung in dem Stand-by-Betriebszustand 90b, folgt ein Startalgorithmus 102b, welcher überwacht, wann die Gartenbearbeitungsmaschine 10b von dem Bediener vorwärts geschoben und die Antriebseinheit der Vorschubunterstützung daher gestartet werden muss. Der Startalgorithmus 102b wird dauerhaft während des Stand-by-Betriebszustands 90b durchgeführt und ist zu einem automatischen Starten der Antriebseinheit der Vorschubunterstützung vorgesehen. Wurde die Antriebseinheit der Vorschubunterstützung gestartet, folgt ein Geschwindigkeitsregelungsalgorithmus 104b, welcher die Geschwindigkeit der handgeführten Gartenbearbeitungsmaschine 10b abhängig von dem Bediener regelt. Während des Geschwindigkeitsregelungsalgorithmus 104b wird zudem ein Stoppalgorithmus 106b durchgeführt, welcher überwacht, wann die Gartenbearbeitungsmaschine 10b von dem Bediener gebremst und die Antriebseinheit der Vorschubunterstützung daher gestoppt werden muss. Der Stoppalgorithmus 106b wird dauerhaft während des Geschwindigkeitsregelungsalgorithmus 104b durchgeführt und ist zu einem automatischen Stoppen der Antriebseinheit der Vorschubunterstützung vorgesehen. Der Startalgorithmus 102b, der Geschwindigkeitsregelungsalgorithmus 104b und der Stoppalgorithmus 106b werden jeweils von der Recheneinheit der handgeführten Gartenbearbeitungsmaschine 10b durchgeführt.

Ferner wird während eines Betriebs zwischen zumindest zwei Fahrbetriebsphasen automatisch eine Offset-Kalibrierung 108b des zumindest einen Sensors der zumindest einen Erfassungseinheit 18b durchgeführt. Die Offset-Kalibrierung 108b wird in dem ersten Zustand 88b zwischen zwei Fahrbetriebsphasen durchgeführt.

Figur 9 zeigt ein schematisches Ablaufdiagramm des Startalgorithmus 102b der handgeführten Gartenbearbeitungsmaschine 10b. Bei dem Startalgorithmus 102b des Verfahrens wird die Antriebseinheit der handgeführten Gartenbearbeitungsmaschine 10b in dem Stand-by-Betriebszustand 90b abhängig von einem Nutzungsverlaufsparameter gestartet. Die Antriebseinheit der handgeführten Gartenbearbeitungsmaschine 10b wird dabei bei Erfassung zumindest eines definierten Nutzungsverlaufs der Gartenbearbeitungsmaschine 10b durch den Bediener gestartet. Auf der Recheneinheit der Gartenbearbeitungsmaschine 10b sind dazu mehrere Startverlaufsprofile hinterlegt. Die Startverlaufsprofile stehen dabei für verschiedene Nutzungstypen. Die Startverlaufsprofile sind dabei jeweils über ein Messfenster der Erfassungseinheit 18b mit einer bestimmten Anzahl an Messpunkten definiert, innerhalb welches eine bestimmte Anzahl an Messpunkten eine vorgegebene Mindestkraft überschreiten muss um das entsprechende Startverlaufsprofil zu erfüllen. Jedes Startverlaufsprofil betrachtet eine feste Anzahl von aufeinanderfolgenden Kraftproben, wobei, wenn eine bestimmte Anzahl Kraftproben innerhalb eines Messfensters über einem eingestellten Kraftwert liegt, die Antriebseinheit startet. In einem ersten Verfahrensschritt 110b des Startalgorithmus 102b werden mittels der Recheneinheit die Messdaten der Erfassungseinheit 18b überwacht. Anschließend werden in weiteren Verfahrensschritten 112b, 112b' die Messdaten jeweils mit den hinterlegten Startverlaufsprofilen verglichen. Wird zumindest eines der Startverlaufsprofile erfüllt, wird in einem weiteren Verfahrensschritt 114b die Antriebseinheit der Vorschubunterstützung gestartet. Bei dem beschriebenen Startalgorithmus 102b wird beispielhaft von zwei Startverlaufsprofilen ausgegangen, wobei grundsätzlich, wie in der Figur 9 angedeutet, auch noch weitere Startverlaufsprofile denkbar sind. Ein erstes Startverlaufsprofil weist beispielhaft ein Messfenster mit einer Dauer von 37,5 ms und drei Messpunkten auf. Ein minimaler Kraftwert des ersten Startverlaufsprofils beträgt 40 N, welcher zu einer Erfüllung des Profils bei drei der drei Messpunkten des Messfensters erreicht werden muss. Das erste Startverlaufsprofil ist für einen Bediener vorgesehen, welcher die Gartenbearbeitungsmaschine 10b sehr schnell und stark anschiebt. Ein zweites Startverlaufsprofil weist dagegen beispielhaft ein Messfenster mit einer Dauer von 50 ms und vier Messpunkten auf. Ein minimaler Kraftwert des zweiten Startverlaufsprofils beträgt 30 N, welcher zu einer Erfüllung des Profils bei vier der vier Messpunkten des Messfensters erreicht werden muss. Das zweite Startverlaufsprofil ist für einen Bediener vorgesehen, welcher die Gartenbearbeitungsmaschine 10b gemächlich anschiebt. Bei beiden Startverlaufsprofilen müssen alle aufeinanderfolgende Messpunkte den minimalen Kraftwert erreichen. Demnach wäre grundsätzlich auch ein einfacherer Algorithmus für den Start ausreichend, bei dem alle aufeinanderfolgenden Kraftproben im Profilfenster die Auslösekraft überschreiten. Grundsätzlich sind auch noch weitere und/oder alternative, einem Fachmann als sinnvoll erscheinende Startverlaufsprofil denkbar. Diese Startprofile verhindern, dass die Antriebseinheit der Gartenbearbeitungsmaschine 10b in dem Stand-by-Betriebszustand 90b startet, wenn die Gartenbearbeitungsmaschine 10b nach hinten gezogen wird. Jegliche Kraftmessung in Vorwärtsrichtung, beispielsweise aufgrund eines Stoßes einer Bodenwelle, wird ignoriert, da die Anzahl der Kraftmessungen die Anzahl der für jedes der Startprofile benötigten Auslösekraftproben nicht erfüllen wird.

Wurde die Antriebseinheit der Vorschubunterstützung aktiviert, wird die Geschwindigkeit der Gartenbearbeitungsmaschine 10b abhängig von einem Bedienerwunsch über den Geschwindigkeitsregelungsalgorithmus 104b geregelt. In einem Fahrbetrieb wird dazu durch Ansteuerung der Antriebseinheit die Verformung des Teilbereichs des Führungseinheit 14b auf einen definierten Wert geregelt. In einem Fahrbetrieb wird durch Ansteuerung der Antriebseinheit die von einem Bediener auf die Führungseinheit 14b ausgeübte Kraft, welche mittels der Erfassungseinheit 18b erfasst wird, auf einen definierten Wert von annähernd 4 N, insbesondere auf einen Wertebereich von 4 N bis 7 N, geregelt. Zu einer Regelung der von einem Bediener auf die Führungseinheit 14b ausgeübten Kraft auf den definierten Wert bzw. Wertebereich wird die Antriebseinheit bei einer Überschreibung des definierten Wertebereichs beschleunigt und bei einer Unterschreitung des definierten Wertebereichs abgebremst. Dazu wird die vom Bediener angewandte Kraft mittels der Erfassungseinheit 18b gemessen. Eine Messung erfolgt dabei beispielhaft mit 80 Hz. Jeder Messwert wird anschließend dazu verwendet, die Geschwindigkeit der Gartenbearbeitungsmaschine 10b einzustellen. Liegt die gemessene Kraft über einem Schwellwert von 7 N wird die Gartenbearbeitungsmaschine 10b beschleunigt. Liegt die gemessene Kraft unter einem Schwellwert von 4 N wird die Gartenbearbeitungsmaschine 10b abgebremst. Dabei sind verschiedenen Kräftebereichen sowie verschiedenen Geschwindigkeitswerten unterschiedliche Beschleunigungswerte zugeordnet. Mit zunehmender Differenz der aktuell vorliegenden Kraft zu dem überschrittenen Schwellwert nimmt ein Betrag der Beschleunigung, insbesondere stufenweise, zu. Ferner nimmt eine maximal mögliche Beschleunigung mit zunehmender aktueller Geschwindigkeit ab. In der nachfolgenden Tabelle sind beispielhaft mögliche Beschleunigungswerte abhängig von einer aktuellen Geschwindigkeit sowie abhängig von einer aktuell vorliegenden Kraft gezeigt.

Wenn die Gartenbearbeitungsmaschine 10b über Bodenwellen im Gras fährt, beeinflussen diese die Kraftmessungen erheblich. Um ein reibungsloses Ansprechen in der Geschwindigkeitsregelung zu gewährleisten, wird ein Beschleunigungs- und Abbremsprofil verwendet, um eine Geschwindigkeitänderungsrate zu begrenzen, mit der sich die Geschwindigkeit bei jeder Kraftmessung ändern kann. Das Abbremsprofil entspricht dabei dem Negativ des Beschleunigungsprofils. Die Profile reduzieren zudem mit zunehmender Geschwindigkeit eine Rate, mit welcher sich die Geschwindigkeit ändern kann, sodass eine Empfindlichkeit mit zunehmender Geschwindigkeit abnimmt. Hierdurch kann erreicht werden, dass Bodenwellen nur einen geringen Einfluss auf das Fahrverhalten haben und zudem, dass aggressive Bediener eine hohe Kraft aufbringen müssen, um die Gartenbearbeitungsmaschine 10b auf die gewünschte hohe Geschwindigkeit zu bringen.

Ferner wird während des Fahrbetriebs abhängig von einem Betriebszustand der Mähwerkeinheit der Gartenbearbeitungsmaschine 10b eine Maximalgeschwindigkeit der Antriebseinheit der handgeführten Gartenbearbeitungsmaschine 10b angepasst. Die Maximalgeschwindigkeit der Antriebseinheit der Vorschubunterstützung der handgeführten Gartenbearbeitungsmaschine 10b wird dabei bei laufender Mähwerkeinheit reduziert. Bei einer zu hohen Geschwindigkeit der Gartenbearbeitungsmaschine 10b während des Mähens kann ein optimales Mähergebnis nicht mehr gewährleistet werden, da sowohl ein Grasschneiden als auch eine Grasaufnahme nicht mehr optimal funktionieren. Ist die Mähwerkeinheit dagegen deaktiviert, wird die Maximalgeschwindigkeit der Antriebseinheit der handgeführten Gartenbearbeitungsmaschine 10b wieder heraufgesetzt.

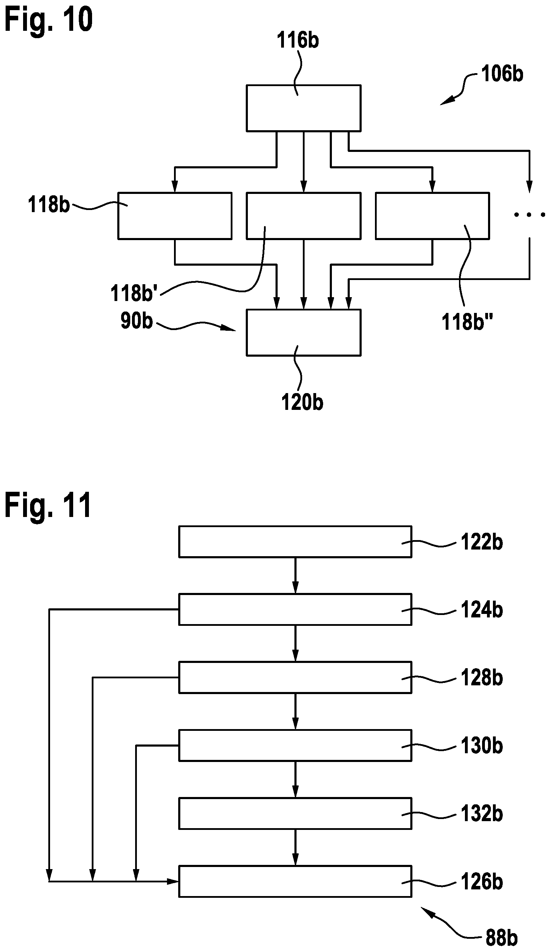

Figur 10 zeigt ein schematisches Ablaufdiagramm des Stoppalgorithmus 106b der handgeführten Gartenbearbeitungsmaschine 10b. Bei dem Stoppalgorithmus 106b des Verfahrens wird die Antriebseinheit der handgeführten Gartenbearbeitungsmaschine 10b in einem Fahrbetrieb abhängig von zumindest einem Nutzungsverlaufsparameter gestoppt. Der Stoppalgorithmus 106b wird während des gesamten Fahrbetriebs durchgeführt. Der Stoppalgorithmus 106b wird parallel zu dem Geschwindigkeitsregelungsalgorithmus 104b durchgeführt. Die Antriebseinheit der handgeführten Gartenbearbeitungsmaschine 10b wird in dem Fahrbetrieb bei Erfassung zumindest eines definierten Nutzungsverlaufs der Gartenbearbeitungsmaschine 10b durch den Bediener gestoppt. Auf der Recheneinheit der Gartenbearbeitungsmaschine 10b sind dazu mehrere Stoppverlaufsprofile hinterlegt. Die Stoppverlaufsprofile stehen dabei für verschiedene Nutzungstypen. Die Stoppverlaufsprofile sind dabei jeweils über ein Messfenster der Erfassungseinheit 18b mit einer bestimmten Anzahl an Messpunkten definiert, innerhalb welches eine bestimmte Anzahl an Messpunkten eine vorgegebene Mindestkraft unterschreiten muss, um das entsprechende Stoppverlaufsprofil zu erfüllen. Jedes Stoppverlaufsprofil betrachtet eine feste Anzahl von aufeinanderfolgenden Kraftproben, wobei wenn eine bestimmte Anzahl Kraftproben innerhalb eines Messfensters unter einem eingestellten Kraftwert liegen, die Antriebseinheit stoppt. In einem ersten Verfahrensschritt 116b des Stoppalgorithmus 106b während des Fahrbetriebs werden mittels der Recheneinheit die Messdaten der Erfassungseinheit 18b überwacht. Anschließend werden in weiteren Verfahrensschritten 118b, 118b', 118b" die Messdaten jeweils mit den hinterlegten Stoppverlaufsprofilen verglichen. Wird zumindest eines der Stoppverlaufsprofile erfüllt, wird in einem weiteren Verfahrensschritt 120b die Antriebseinheit der Vorschubunterstützung gestoppt. Die Antriebseinheit der Vorschubunterstützung befindet sich nun wieder in dem Stand-by-Betriebszustand 90b. Bei dem beschriebenen Stoppalgorithmus 106b wird beispielhaft von drei Stoppverlaufsprofilen ausgegangen, wobei grundsätzlich, wie in der Figur 10 angedeutet, auch noch weitere Stoppverlaufsprofile denkbar sind. Ein erstes Stoppverlaufsprofil weist beispielhaft ein Messfenster mit einer Dauer von 100 ms und acht Messpunkten auf. Ein minimaler Kraftwert des ersten Stoppverlaufsprofils beträgt - 40 N, welcher zu einer Erfüllung des Profils bei sieben der acht Messpunkte des Messfensters unterschritten bzw. erreicht werden muss. Ein zweites Stoppverlaufsprofil weist beispielhaft ein Messfenster mit einer Dauer von 300 ms und 24 Messpunkten auf. Ein negativer minimaler Kraftwert des zweiten Stoppverlaufsprofils beträgt -30 N, welcher zu einer Erfüllung des Profils bei 23 der 24 Messpunkten des Messfensters unterschritten bzw. erreicht werden muss. Ein drittes Stoppverlaufsprofil weist beispielhaft ein Messfenster mit einer Dauer von 875 ms und 70 Messpunkten auf. Ein negativer minimaler Kraftwert des dritten Stoppverlaufsprofils beträgt -5 N, welcher zu einer Erfüllung des Profils bei 62 der 70 Messpunkten des Messfensters unterschritten bzw. erreicht werden muss. Grundsätzlich sind auch noch weitere und/oder alternative, einem Fachmann als sinnvoll erscheinende Stoppverlaufsprofile denkbar. Durch die verschiedenen Stoppverlaufsprofile können verschiedene Szenarien, also in welcher Art und Weise ein Bediener die Gartenbearbeitungsmaschine 10b zu einem Stoppen zurückzieht, abgedeckt werden. Die Gartenbearbeitungsmaschine 10b wird dabei insbesondere schneller gestoppt, wenn der Bediener stark an der Führungseinheit 14b zieht und langsamer gestoppt, wenn er sanft an der Führungseinheit 14b zieht. Da die Szenarien zu einem Stoppen der Antriebseinheit der Gartenbearbeitungsmaschine 10b mehr variieren als bei einem Starten der Antriebseinheit der Gartenbearbeitungsmaschine 10b, sind beispielhaft drei Stoppverlaufsprofile und lediglich zwei Startverlaufsprofile vorgesehen.

Der Startalgorithmus 102b und der Stoppalgorithmus 106b müssen dabei insbesondere derart abgestimmt werden, um mit allen Szenarien umzugehen, die bei der Gartenbearbeitungsmaschine 10b auftreten können. Insbesondere kann durch den Startalgorithmus 102b und den Stoppalgorithmus 106b sowohl für das Mähen auf langen Geraden, als auch auf sehr kurzen Vor-Zurück-Mähstrecken ein idealer Betrieb bereitgestellt werden.

Figur 11 zeigt ein schematisches Ablaufdiagramm der Offset-Kalibrierung 108b der handgeführten Gartenbearbeitungsmaschine 10b. Die Offset-Kalibrierung 108b wird in einem aktivierten Zustand der handgeführten Gartenbearbeitungsmaschine 10b, während einer Standphase der handgeführten Gartenbearbeitungsmaschine 10b automatisch durchgeführt. Die Offset-Kalibrierung 108b dient einer Kalibrierung der Sensoren der Erfassungseinheit 18b. Bei der Offset-Kalibrierung 108b wird in einem ersten Verfahrensschritt 122b überprüft, ob das Betätigungselement 38b der Betätigungseinheit 36b unbetätigt ist. Ist das Betätigungselement 38b für sieben Sekunden unbetätigt, werden in einem zweiten Verfahrensschritt 124b beispielhaft 90 Kraftmessungen bei den Sensoren der Erfassungseinheit 18b durchgeführt. Deutet eine Kraftverteilung darauf hin, dass die Gartenbearbeitungsmaschine 10b bewegt wird, wird die Offset-Kalibrierung 108b abgebrochen und es wird in einem weiteren Verfahrensschritt 126b gemäß dem ersten Zustand 88b der handgeführten Gartenbearbeitungsmaschine 10b gewartet, bis das Betätigungselement 38b geschlossen wird. Deutet die Kraftverteilung darauf hin, dass die Gartenbearbeitungsmaschine 10b vollständig stillsteht, werden in einem dritten Verfahrensschritt 128b die Kalibrierungsoffsets der Sensoren berechnet. Wird festgestellt, dass eine Nachkalibrierung nicht notwendig ist, da eine Abweichung zwischen einem aktuell hinterlegten Offset und dem berechneten Kalibrierungsoffset zu gering ist, folgt der weitere Verfahrensschritt 126b und die Offset-Kalibrierung 108b wird abgebrochen. Ist der berechnete Kalibrierungsoffset gegenüber dem aktuell hinterlegten Offset um mehr als 5% versetzt, wird in einem vierten Verfahrensschritt 130b die Versorgungsspannung der Gartenbearbeitungsmaschine 10b überprüft. Ist die Versorgungsspannung geringer als 33 V, folgt der weitere Verfahrensschritt 126b und die Offset-Kalibrierung 108b wird abgebrochen. Ist die Versorgungsspannung der Gartenbearbeitungsmaschine 10b größer gleich 33 V, wird in einem fünften Verfahrensschritt 132b ein korrigierter Kalibrierungsoffset der Sensoren auf eine Speichereinheit, insbesondere einen Flashspeicher, der Recheneinheit geschrieben. Vorzugsweise weist der korrigierte Kalibrierungsoffset jedoch eine Abweichung von annähernd 0,5% des hinterlegten Offsetwerts in Richtung des berechneten Kalibrierungsoffset auf. Hierdurch können Fehlmessungen bei der Offset-Kalibrierung 108b vorteilhaft ausgeglichen und eine gleichmäßige Anpassung des Offsetwerts erreicht werden. Ist eine Beschreibung der Speichereinheit abgeschlossen, folgt der weitere Verfahrensschritt 126b und die Offset-Kalibrierung 108b ist abgeschlossen.

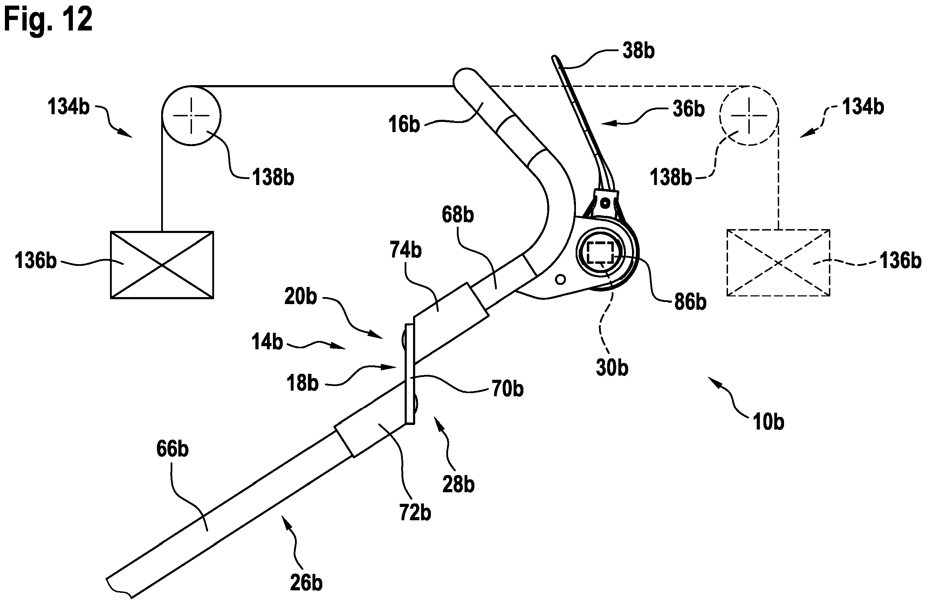

Zudem werden die Sensoren der Erfassungseinheit 18b bereits vor einem Verkauf, insbesondere ab Werk, kalibriert. Die Sensoren müssen werksseitig kalibriert werden, um sicherzustellen, dass sie die korrekte Kraftmessung an die Recheneinheit der Gartenbearbeitungsmaschine 10b liefern. Die werksseitige Kalibrierung erfasst die Verstärkung und den Versatz bzw. Offset der Sensoren der Erfassungseinheit 18b und programmiert die berechneten Werte in die Speichereinheit der Recheneinheit. Die Recheneinheit weist dazu eine nicht weiter sichtbare Kommunikationsschnittstelle auf, über welche die Recheneinheit und die Erfassungseinheit 18b an einen Computer angeschlossen werden können. Eine Anwendung auf dem Computer, insbesondere eine Windows-Anwendung, führt einen Arbeiter dazu durch die Schritte einer Ab-Werk-Kalibrierung. Der Versatz bzw. der Offset jedes Sensors der Erfassungseinheit 18b werden durch eine Überwachung der Messdaten der Sensoren ohne eine an der Führungseinheit 14b angelegte Kraft berechnet. Die Verstärkung der Sensoren der Erfassungseinheit 18b werden durch eine Überwachung der Messdaten der Sensoren ohne eine an der Führungseinheit 14b angelegte Kraft berechnet. Dazu wird in einem Kalibrierungsaufbau 134b ein Gewicht 136b mit einer bekannten Masse über eine Umlenkrolle 138b mittig mit der Führungseinheit 14b gekoppelt, sodass eine Kraft des Gewichts 136 waagerecht an der Führungseinheit 14b angreift. Dies wird sowohl in Vorwärtsrichtung, wie in Figur 12 dargestellt, als auch in Rückwärtsrichtung, wie in Figur 12 gestrichelt angedeutet, durchgeführt. Das Gewicht 136b weist beispielhaft eine Gewichtskraft von 20 N auf (Figur 12).

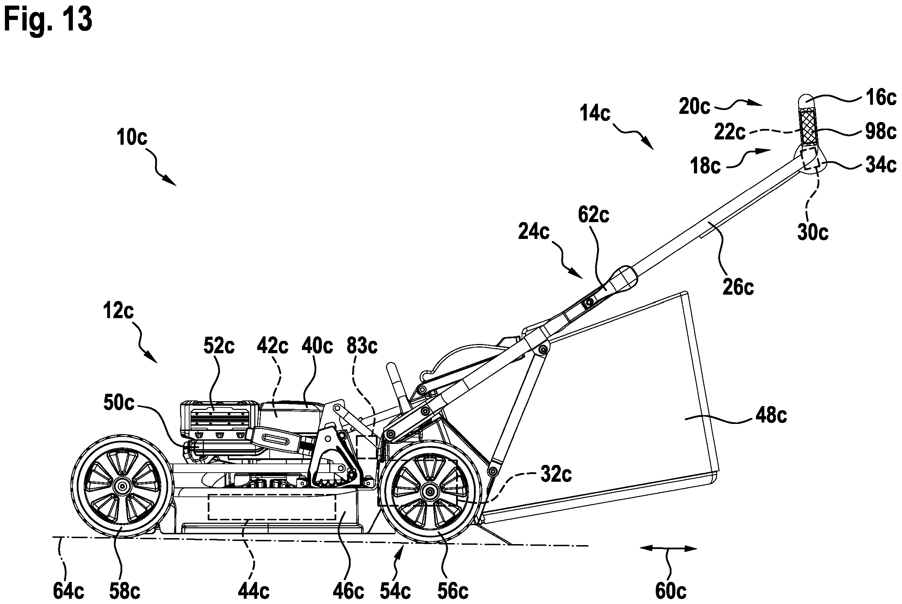

Figur 13 zeigt eine Gartenbearbeitungsmaschine 10c, die als Rasenmäher ausgebildet ist. Die Gartenbearbeitungsmaschine 10c weist eine Grundeinheit 12c auf. Die Gartenbearbeitungsmaschine 10c weist ferner eine Antriebseinheit 42c auf. Zu einer Bewegung der Gartenbearbeitungsmaschine 10c auf einer Arbeitsfläche, insbesondere einer Grünfläche, weist die Gartenbearbeitungsmaschine 10c zumindest eine Fahrwerkseinheit 54c auf.

Ferner weist die handgeführte Gartenbearbeitungsmaschine 10c eine Führungseinheit 14c auf. Die Führungseinheit 14c ist zu einer direkten Führung der Gartenbearbeitungsmaschine 10c vorgesehen. Mittels der Führungseinheit 14c wird die Gartenbearbeitungsmaschine 10c während eines Betriebs regulär bewegt, insbesondere geschoben. Die Führungseinheit 14c ist im Wesentlichen U-förmig ausgebildet, wobei die beiden Enden an der Grundeinheit 12c befestigt sind. Die Führungseinheit 14c weist zwei Handgriffe 16c, 16b' auf. Die Handgriffe 16c, 16b' sind jeweils von einem Griffhebel gebildet. Die Handgriffe 16c, 16b' sind über eine Querstange 84c verbunden. Die Handgriffe 16c, 16b' sind während eines Betriebs der Gartenbearbeitungsmaschine 10c zu einer Kontaktierung durch den Bediener vorgesehen. Die Handgriffe 16c, 16b' erstrecken sich jeweils im Wesentlichen senkrecht zu einer Haupterstreckungsrichtung 60c der Gartenbearbeitungsmaschine 10c. Die Handgriffe 16c, 16b' erstrecken sich ferner im Wesentlichen senkrecht zu einer Standebene 64c der Gartenbearbeitungsmaschine 10c. Die Handgriffe 16c, 16b' weisen jeweils eine Griffhülse 98c, 98b' auf. Die Griffhülsen 98c, 98b' bestehen jeweils aus einem elastischen Material. Die Griffhülsen 98c, 98b' sind zu einer direkten Kontaktierung durch einen Bediener vorgesehen. Ferner weist die Führungseinheit 14c zwei Führungsstangen 26c, 26b' auf. Die Führungsstangen 26c, 26b' sind im Wesentlichen stangenförmig ausgebildet. Die Führungsstangen 26c, 26b' bestehen im Wesentlichen aus Rohren. Die Rohre weisen beispielhaft einen Durchmesser von 26 mm auf. Es sind verschiedene, einem Fachmann als sinnvoll erscheinende Materialien denkbar, wie beispielsweise ein Kohlefaserverbundwerkstoff, Kunststoff oder Metall. Die Führungsstangen 26c, 26b' schließen jeweils an einen der beiden Handgriffe 16c, 16b' an. Die Führungsstangen 26c, 26b' erstrecken sich im Wesentlichen senkrecht zu der Querstange 84c. Eine Haupterstreckungsrichtung der Führungsstangen 26c, 26b' erstreckt sich jeweils im Wesentlichen senkrecht zu der Haupterstreckungsrichtung des Handgriffs 16c. Die Führungsstangen 26c, 26b' erstrecken sich von den Handgriffen 16c, 16b' zu der Grundeinheit 12c. Die Führungsstangen 26c, 26b' bilden jeweils an einem dem Handgriff 16c abgewandten Ende einen Anschlussbereich 24c zu der Grundeinheit 12c.

Des Weiteren weist die Gartenbearbeitungsmaschine 10c eine Erfassungseinheit 18c auf. Die Erfassungseinheit 18c ist zu einer Erfassung einer von einem Bediener gewünschten Vorschubsunterstützung der Grundeinheit 12c vorgesehen. Die Erfassungseinheit 18c ist zu einer Erfassung einer von einem Bediener gewünschten Unterstützung bei einer Bewegung der handgeführten Gartenbearbeitungsmaschine 10c vorgesehen. Ferner ist die Erfassungseinheit 18c zu einer Erfassung einer Verformung zumindest eines Teilbereichs 20c, 20b' der Führungseinheit 14c vorgesehen. Die Erfassungseinheit 18c ist zu einer Erfassung einer Verformung von zwei zueinander beabstandeten Teilbereichen 20c, 20b' der Führungseinheit 14c vorgesehen. Die Erfassungseinheit 18c ist zu einer Erfassung einer Verformung der Griffhülsen 98c, 98b' der Handgriffe 16c, 16b' der Führungseinheit 14c vorgesehen.

Die Erfassungseinheit 18c weist zumindest einen Sensor 22c, 22b' auf. Die Erfassungseinheit 18c weist zumindest einen elektrischen Sensor 22c, 22b' auf. Die Erfassungseinheit 18a weist zwei Sensoren 22c, 22b' auf. Die Sensoren 22c, 22b' sind jeweils von einem elektrischen Sensor gebildet. Die Sensoren 22c, 22b' sind zu einer Erfassung einer Verformung der zwei zueinander beabstandeten Teilbereiche 20c, 20b' der Führungseinheit 14c vorgesehen. Die Sensoren 22c, 22b' sind jeweils zu einer Erfassung einer Verformung einer der beiden Teilbereiche 20c, 20b' der Führungseinheit 14c vorgesehen. Die Sensoren 22c, 22b' sind jeweils unter den Griffhülsen 98c, 98b' angeordnet. Jede der Sensoren 22c, 22b' ist unter jeweils einer der Griffhülsen 98c, 98b' angeordnet. Die elektrischen Sensoren 22c, 22b' der Erfassungseinheit 18c sind jeweils von einem Drucksensor gebildet. Die elektrischen Sensoren 22c, 22b' der Erfassungseinheit 18c sind jeweils von einem piezoelektrischen Sensor gebildet. Grundsätzlich ist jedoch auch eine andere, einem Fachmann als sinnvoll erscheinende Ausbildung der Sensoren 22c, 22b' denkbar. Grundsätzlich ist jedoch auch denkbar, dass die Sensoren 22c, 22b' jeweils mehrere piezoelektrische Sensoren umfasst.

Ferner ist die Erfassungseinheit 18c zu einer Erfassung einer Kenngröße einer mechanischen Spannung in den Teilbereichen 20c, 20b' der Führungseinheit 14c vorgesehen. Die Erfassungseinheit 18c ist zu einer Erfassung einer Kenngröße der Verformung der Teilbereiche 20c, 20b' der Führungseinheit 14c vorgesehen. Mittels der Sensoren 22c, 22b' wird jeweils getrennt voneinander jeweils eine Kenngröße einer Verformung in den Teilbereichen 20c, 20b' der Führungseinheit 14c erfasst. Die Erfassungseinheit 18c ist zu einer Erfassung einer Richtung einer mechanischen Spannung in den Teilbereichen 20c, 20b' der Führungseinheit 14c vorgesehen. Die Erfassungseinheit 18c erfasst dabei sowohl eine Richtung als auch eine Stärke der Verformung der Teilbereiche 20c, 20b' der Führungseinheit 14c. Bei einer Richtung wird lediglich zwischen zwei Richtungen unterschieden. Eine Richtung der Verformung der Teilbereiche 20c, 20b' der Führungseinheit 14c wird dabei durch ein Vorzeichen der Stärke der Verformung bestimmt. Zudem wird von der Erfassungseinheit 18c ein reines Greifen erfasst, ohne dass eine Kraft in eine Richtung ausgeübt wird. Dadurch kann vorzugsweise ein Stand-by-Betriebszustand erfasst werden.

Des Weiteren weist die handgeführte Gartenbearbeitungsmaschine 10c eine Recheneinheit 30c auf. Die Recheneinheit 30c ist, zu einer Ansteuerung der Antriebseinheit 32c, zu einer Auswertung von Sensordaten der Erfassungseinheit 18c sowie zu einer Auswertung einer aktuellen Betriebskenngröße der handgeführten Gartenbearbeitungsmaschine 10c vorgesehen. Die Recheneinheit 30c ist, zu einer Ansteuerung der als Unterstützungsantrieb ausgebildeten Antriebseinheit 32c zur Fortbewegung der handgeführten Gartenbearbeitungsmaschine 10c, zu einer Auswertung von Sensordaten der Erfassungseinheit 18c sowie zu einer Auswertung einer aktuellen Betriebskenngröße der handgeführten Gartenbearbeitungsmaschine 10c vorgesehen. Die Recheneinheit 30c ist dazu vorgesehen, abhängig von einer erfassten Verformung der Teilbereiche 20c, 20b' der Führungseinheit 14c sowie abhängig von einer erfassten, aktuellen Betriebskenngröße der handgeführten Gartenbearbeitungsmaschine 10c die als Unterstützungsantrieb ausgebildete Antriebseinheit 32c der handgeführten Gartenbearbeitungsmaschine 10c anzusteuern. Die Recheneinheit 30c ist dazu mit den Sensoren 22c, 22b' verbunden.

Zudem weist die handgeführte Gartenbearbeitungsmaschine 10c eine weitere Recheneinheit 83c auf, welche zu einer Ansteuerung der Antriebseinheit 42c für die Mähwerkeinheit 44c vorgesehen ist. Die weitere Recheneinheit 83c ist in der Grundeinheit 12c der handgeführten Gartenbearbeitungsmaschine 10c angeordnet.

Ferner weist die handgeführte Gartenbearbeitungsmaschine 10c ein Einstellelement 34c auf. Das Einstellelement 34c ist an der Querstange 84c der Führungseinheit 14c angeordnet. Das Einstellelement 34c ist zu einer Einstellung einer Sensitivität der Erfassungseinheit 18c vorgesehen. Das Einstellelement 34c ist zu einer Einstellung eines Faktors vorgesehen, mit welchem die Verformung der Teilbereiche 20c, 20b' der Führungseinheit 14c für eine Berechnung einer Vorschubsunterstützung berücksichtigt wird.

## Patentansprüche

1. Handgeführte Gartenbearbeitungsmaschine, insbesondere SchiebeRasenmäher, mit zumindest einer Grundeinheit (12a; 12c), mit zumindest einer Führungseinheit (14a; 14b; 14c), welche zumindest einen Handgriff (16a; 16b; 16c, 16c') aufweist, und mit zumindest einer Erfassungseinheit (18a; 18b; 18c), welche zu einer Erfassung einer von einem Bediener gewünschten Vorschubsunterstützung der Grundeinheit (12a; 12c) vorgesehen ist, **dadurch gekennzeichnet, dass** die zumindest eine Erfassungseinheit (18a; 18b; 18c) zu einer Erfassung einer Relativbewegung zweier miteinander verbundener Punkte zumindest eines Teilbereichs (20a, 20a'; 20b; 20c, 20c') der Führungseinheit (14a; 14b; 14c) durch Verformung des Teilbereichs (20a, 20a'; 20b; 20c, 20c') vorgesehen ist, wobei die Punkte des Teilbereichs (20a, 20a'; 20b; 20c, 20c') fest, vorzugsweise einstückig miteinander verbunden sind.

2. Handgeführte Gartenbearbeitungsmaschine nach Anspruch 1, **dadurch gekennzeichnet, dass** die zumindest eine Erfassungseinheit (18a; 18b) zumindest einen Sensor (22a, 22a') aufweist, welcher in einem Mittelbereich der Führungseinheit (14a; 14b) zwischen dem Handgriff (16a; 16b) und einem Anschlussbereich (24a) zu der Grundeinheit (12a) angeordnet ist.

3. Handgeführte Gartenbearbeitungsmaschine nach Anspruch 1 oder 2, **dadurch gekennzeichnet, dass** der zumindest eine Teilbereich (20a, 20a'; 20b) der Führungseinheit (14a; 14cb) gegenüber einem angrenzenden Bereich der Führungseinheit (14a) eine geringere Biegesteifigkeit aufweist.

4. Handgeführte Gartenbearbeitungsmaschine nach einem der vorhergehenden Ansprüche, **dadurch gekennzeichnet, dass** die zumindest eine Erfassungseinheit (18a; 18b; 18c) zumindest einen elektrischen Sensor (22a, 22a'; 22c, 22b') aufweist.

5. Handgeführte Gartenbearbeitungsmaschine nach Anspruch 4, **dadurch gekennzeichnet, dass** der zumindest eine elektrische Sensor (22a, 22a') der Erfassungseinheit (18a; 18b) von einem Dehnungsmessstreifen gebildet ist.

6. Handgeführte Gartenbearbeitungsmaschine nach einem der vorhergehenden Ansprüche, **dadurch gekennzeichnet, dass** die Erfassungseinheit (18a; 18b; 18c) zu einer Erfassung zumindest einer Kenngröße einer mechanischen Spannung in dem zumindest einen Teilbereich (20a, 20a'; 20b; 20c, 20c') der Führungseinheit (14a; 14b; 14c) vorgesehen ist.

7. Handgeführte Gartenbearbeitungsmaschine nach Anspruch 6, **dadurch gekennzeichnet, dass** die Erfassungseinheit (18a; 18b; 18c) zumindest zu einer Erfassung einer Richtung einer mechanischen Spannung in dem zumindest einen Teilbereich (20a, 20a'; 20b; 20c, 20c') der Führungseinheit (14a; 14b; 14c) vorgesehen ist.

8. Handgeführte Gartenbearbeitungsmaschine nach einem der vorhergehenden Ansprüche, **dadurch gekennzeichnet, dass** die zumindest eine Führungseinheit (14a; 14b) zumindest eine Führungsstange (26a, 26a'; 26b) aufweist, welche sich von dem Handgriff (16a; 16b) zu der Grundeinheit (12a) erstreckt und zumindest einen Versatz (28a, 28a'; 28b) aufweist, welcher in dem zumindest einen Teilbereich (20a, 20a'; 20b) liegt, wobei die zumindest eine Erfassungseinheit (18a; 18b) zumindest einen Sensor (22a, 22a') aufweist, welcher in einem Bereich des Versatzes (28a, 28a'; 28b) angeordnet ist.

9. Handgeführte Gartenbearbeitungsmaschine nach einem der vorhergehenden Ansprüche, **gekennzeichnet durch** zumindest eine an der Führungseinheit (14a; 14b) angeordnete Betätigungseinheit (36a; 36b), die zumindest ein beweglich gelagertes Betätigungselement (38a; 38b) umfasst, welches zu einer Aktivierung eines Stand-by-Betriebszustands (90a, 92a; 90b, 92b) vorgesehen ist.

10. Verfahren zu einem Betrieb einer handgeführten Gartenbearbeitungsmaschine (10a; 10b; 10c), insbesondere einer handgeführten Gartenbearbeitungsmaschine (10a; 10b; 10c) nach einem der vorhergehenden Ansprüche, **dadurch gekennzeichnet, dass** eine Antriebseinheit (32a; 32c) einer Vorschubunterstützung der handgeführten Gartenbearbeitungsmaschine (10a; 10b; 10c) zumindest abhängig von einer Relativbewegung zweier miteinander verbundener Punkte eines Teilbereichs (20a, 20a'; 20b; 20c, 20c') einer Führungseinheit (14a; 14b; 14c) der handgeführten Gartenbearbeitungsmaschine (10a; 10b; 10c), durch Verformung des Teilbereichs (20a, 20a'; 20b; 20c, 20c'), angesteuert wird, wobei die Punkte des Teilbereichs (20a, 20a'; 20b; 20c, 20c') fest, vorzugsweise einstückig miteinander verbunden sind.

11. Verfahren nach Anspruch 10, **dadurch gekennzeichnet, dass** ein Fahrunterstützungsmodus durch Betätigung eines Betätigungselements (38a; 38b) einer Betätigungseinheit (36a; 36b) der handgeführten Gartenbearbeitungsmaschine (10a; 10b) in einen Stand-by-Betriebszustand (90a, 92a; 90b, 92b) versetzt wird.

12. Verfahren nach Anspruch 11, **dadurch gekennzeichnet, dass** die Antriebseinheit (32a) der handgeführten Gartenbearbeitungsmaschine (10a; 10b) in dem Stand-by-Betriebszustand (90a; 90b) zumindest abhängig von einem Wert einer erfassten Verformung zumindest eines Teilbereichs (20a; 20b) einer Führungseinheit (14a; 14b) angesteuert wird.

13. Verfahren nach einem der Ansprüche 11 oder 12, **dadurch gekennzeichnet, dass** die Antriebseinheit der Vorschubunterstützung der handgeführten Gartenbearbeitungsmaschine (10b) in dem Stand-by-Betriebszustand (90b) abhängig von zumindest einem Nutzungsverlaufsparameter gestartet wird.

14. Verfahren nach einem der Ansprüche 10 bis 13, **dadurch gekennzeichnet, dass** in einem Fahrbetrieb durch Ansteuerung der Antriebseinheit der Vorschubunterstützung die Verformung des Teilbereichs (20b) der Führungseinheit (14b) auf einen definierten Wert oder Wertebereich geregelt wird.

15. Verfahren nach einem der Ansprüche 10 bis 14, **dadurch gekennzeichnet, dass** die Antriebseinheit der Vorschubunterstützung der handgeführten Gartenbearbeitungsmaschine (10b) in einem Fahrbetrieb abhängig von zumindest einem Nutzungsverlaufsparameter gestoppt wird.

16. Verfahren nach einem der Ansprüche 10 bis 15, **dadurch gekennzeichnet, dass** während eines Betriebs zwischen zumindest zwei Fahrbetriebsphasen automatisch eine Offset-Kalibrierung (108b) zumindest eines Sensors zumindest einer Erfassungseinheit (18b) der handgeführten Gartenbearbeitungsmaschine (10b) durchgeführt wird.

## Claims

1. Manually guided garden care machine, in particular push lawnmower, comprising at least one base unit (12a; 12c), at least one guide unit (14a; 14b; 14c), which has at least one handle (16a; 16b; 16c, 16c'), and at least one sensing unit (18a; 18b; 18c), which is designed to sense an operator's wish for assistance in propelling the base unit (12a; 12c), **characterized in that** the at least one sensing unit (18a; 18b; 18c) is designed to sense a relative movement of two interconnected points of at least one sub-region (20a, 20a'; 20b; 20c, 20c') of the guide unit (14a; 14b; 14c) through a deformation of the sub-region (20a, 20a'; 20b; 20c, 20c'), wherein the points of the sub-region (20a, 20a'; 20b; 20c, 20c') are fixedly interconnected, preferably integrally interconnected.

2. Manually guided garden care machine according to Claim 1, **characterized in that** the at least one sensing unit (18a; 18b) has at least one sensor (22a, 22a') that is arranged in a central region of the guide unit (14a; 14b), between the handle (16a; 16b) and a region of connection (24a) to the base unit (12a).

3. Manually guided garden care machine according to Claim 1 or 2, **characterized in that** the at least one sub-region (20a, 20a'; 20b) of the guide unit (14a; 14cb) has a lesser bending stiffness in comparison with an adjoining region of the guide unit (14a).

4. Manually guided garden care machine according to any one of the preceding claims, **characterized in that** the at least one sensing unit (18a; 18b; 18c) has at least one electrical sensor (22a, 22a'; 22c, 22b').

5. Manually guided garden care machine according to Claim 4, **characterized in that** the at least one electrical sensor (22a, 22a') of the sensing unit (18a; 18b) is constituted by a strain gauge.

6. Manually guided garden care machine according to any one of the preceding claims, **characterized in that** the sensing unit (18a; 18b; 18c) is designed to sense at least one characteristic quantity of a mechanical stress in the at least one sub-region (20a, 20a'; 20b; 20c, 20c') of the guide unit (14a; 14b; 14c).

7. Manually guided garden care machine according to Claim 6, **characterized in that** the sensing unit (18a; 18b; 18c) is designed at least to sense a direction of a mechanical stress in the at least one sub-region (20a, 20a'; 20b; 20c, 20c') of the guide unit (14a; 14b; 14c).

8. Manually guided garden care machine according to any one of the preceding claims, **characterized in that** the at least one guide unit (14a; 14b) has at least one guide rod (26a, 26a'; 26b), which extends from the handle (16a; 16b) to the base unit (12a), and which has at least one offset (28a, 28a'; 28b), located in the at least one sub-region (20a, 20a'; 20b), wherein the at least one sensing unit (18a; 18b) has at least one sensor (22a, 22a') that is arranged in a region of the offset (28a, 28a'; 28b).

9. Manually guided garden care machine according to any one of the preceding claims, **characterized by** at least one actuating unit (36a; 36b), which is arranged on the guide unit (14a; 14b) and which comprises at least one movably mounted actuating element (38a; 38b) that is designed to activate a stand-by operating state (90a, 92a; 90b, 92b).

10. Method for operating a manually guided garden care machine (10a; 10b; 10c), in particular a manually guided garden care machine (10a; 10b; 10c) according to any one of the preceding claims, **characterized in that** a drive unit (32a; 32c) of a propelling assistance of the manually guided garden care machine (10a; 10b; 10c) is controlled at least in dependence on a relative movement of two interconnected points of a sub-region (20a, 20a'; 20b; 20c, 20c') of a guide unit (14a; 14b; 14c) of the manually guided garden care machine (10a; 10b; 10c) through a deformation of the sub-region (20a, 20a'; 20b; 20c, 20c'), wherein the points of the sub-region (20a, 20a'; 20b; 20c, 20c') are fixedly interconnected, preferably integrally interconnected.

11. Method according to Claim 10, **characterized in that** a travel assistance mode is put into a stand-by operating state (90a, 92a; 90b, 92b) by actuation of an actuating element (38a; 38b) of an actuating unit (36a; 36b) of the manually guided garden care machine (10a; 10b).

12. Method according to Claim 11, **characterized in that** the drive unit (32a) of the manually guided garden care machine (10a; 10b) in the stand-by operating state (90a; 90b) is controlled at least in dependence on a value of a sensed deformation of at least one sub-region (20a; 20b) of a guide unit (14a; 14b).

13. Method according to either one of Claims 11 and 12, **characterized in that** the drive unit of the propelling assistance of the manually guided garden care machine (10b) in the stand-by operating state (90b) is started in dependence on at least one usage behavior parameter.

14. Method according to any one of Claims 10 to 13, **characterized in that,** in a travel mode, the deformation of the sub-region (20b) of the guide unit (14b) is regulated to a defined value or value range by control of the drive unit of the propelling assistance.

15. Method according to any one of Claims 10 to 14, **characterized in that** the drive unit of the propelling assistance of the manually guided garden care machine (10b) in a travel mode is stopped in dependence on at least one usage behavior parameter.

16. Method according to any one of Claims 10 to 15, **characterized in that** an offset calibration (108b) of at least one sensor of at least one sensing unit (18b) of the manually guided garden care machine (10b) is performed automatically during operation, between at least two travel mode phases.

## Revendications

1. Machine de travail pour le jardin guidée manuellement, en particulier tondeuse poussée, comportant au moins une unité de base (12a ; 12c), comportant au moins une unité de guidage (14a ; 14b ; 14c), laquelle comprend au moins une poignée (16a ; 16b ; 16c, 16c'), et comportant au moins une unité de détection (18a ; 18b ; 18c), laquelle est prévue pour la détection d'une assistance d'avancement, souhaitée par un utilisateur, de l'unité de base (12a ; 12c), **caractérisée en ce que** l'au moins une unité de détection (18a ; 18b ; 18c) est prévue pour une détection d'un mouvement relatif de deux points reliés l'un à l'autre d'au moins une région partielle (20a, 20a' ; 20b ; 20c, 20c') de l'unité de guidage (14a ; 14b ; 14c) par déformation de la région partielle (20a, 20a' ; 20b ; 20c, 20c'), les points de la région partielle (20a, 20a' ; 20b ; 20c, 20c') étant reliés l'un à l'autre fixement, de préférence d'un seul tenant.

2. Machine de travail pour le jardin guidée manuellement selon la revendication 1, **caractérisée en ce que** l'au moins une unité de détection (18a ; 18b) comprend au moins un capteur (22a, 22a'), lequel est disposé dans une région centrale de l'unité de guidage (14a ; 14b) entre la poignée (16a ; 16b) et une région de raccordement (24a) à l'unité de base (12a).

3. Machine de travail pour le jardin guidée manuellement selon la revendication 1 ou 2, **caractérisée en ce que** l'au moins une région partielle (20a, 20a'; 20b) de l'unité de guidage (14a ; 14cb) présente une rigidité à la flexion inférieure par rapport à une région adjacente de l'unité de guidage (14a).

4. Machine de travail pour le jardin guidée manuellement selon l'une des revendications précédentes, **caractérisée en ce que** l'au moins une unité de détection (18a ; 18b ; 18c) comprend au moins un capteur électrique (22a, 22a' ; 22c, 22b').

5. Machine de travail pour le jardin guidée manuellement selon la revendication 4, **caractérisée en ce que** l'au moins un capteur électrique (22a, 22a') de l'unité de détection (18a ; 18b) est formé par une jauge extensométrique.

6. Machine de travail pour le jardin guidée manuellement selon l'une des revendications précédentes, **caractérisée en ce que** l'unité de détection (18a ; 18b ; 18c) est prévue pour une détection d'au moins une grandeur caractéristique d'une contrainte mécanique dans l'au moins une région partielle (20a, 20a' ; 20b ; 20c, 20c') de l'unité de guidage (14a ; 14b ; 14c).

7. Machine de travail pour le jardin guidée manuellement selon la revendication 6, **caractérisée en ce que** l'unité de détection (18a ; 18b ; 18c) est prévue au moins pour une détection d'une direction d'une contrainte mécanique dans l'au moins une région partielle (20a, 20a' ; 20b ; 20c, 20c') de l'unité de guidage (14a ; 14b ; 14c).

8. Machine de travail pour le jardin guidée manuellement selon l'une des revendications précédentes, **caractérisée en ce que** l'au moins une unité de guidage (14a ; 14b) comprend au moins une tige de guidage (26a, 26a' ; 26b), laquelle s'étend de la poignée (16a ; 16b) à l'unité de base (12a) et présente au moins un décalage (28a, 28a' ; 28b), lequel se situe dans l'au moins une région partielle (20a, 20a' ; 20b), l'au moins une unité de détection (18a ; 18b) comprenant au moins un capteur (22a, 22a'), lequel est disposé dans une région du décalage (28a, 28a' ; 28b).

9. Machine de travail pour le jardin guidée manuellement selon l'une des revendications précédentes, **caractérisée par** au moins une unité d'actionnement (36a ; 36b) disposée au niveau de l'unité de guidage (14a ; 14b), laquelle unité d'actionnement comporte un élément d'actionnement (38a ; 38b) monté mobile, lequel est prévu pour une activation d'un état de fonctionnement d'attente (90a, 92a ; 90b, 92b).

10. Procédé de fonctionnement d'une machine de travail pour le jardin guidée manuellement (10a ; 10b ; 10c), en particulier d'une machine de travail pour le jardin guidée manuellement (10a ; 10b ; 10c) selon l'une des revendications précédentes, **caractérisé en ce qu'**une unité d'entraînement (32a ; 32c) d'une assistance d'avancement de la machine de travail pour le jardin guidée manuellement (10a ; 10b ; 10c) est commandée au moins en fonction d'un mouvement relatif de deux points reliés l'un à l'autre d'une région partielle (20a, 20a' ; 20b ; 20c, 20c') d'une unité de guidage (14a ; 14b ; 14c) de la machine de travail pour le jardin guidée manuellement (10a ; 10b ; 10c) par déformation de la région partielle (20a, 20a' ; 20b ; 20c, 20c'), les points de la région partielle (20a, 20a' ; 20b ; 20c, 20c') étant reliés l'un à l'autre fixement, de préférence d'un seul tenant.

11. Procédé selon la revendication 10, **caractérisé en ce qu'**un mode d'assistance à la conduite est transféré à un état de fonctionnement d'attente (90a, 92a ; 90b, 92b) par actionnement d'un élément d'actionnement (38a ; 38b) d'une unité d'actionnement (36a ; 36b) de la machine de travail pour le jardin guidée manuellement (10a ; 10b).

12. Procédé selon la revendication 11, **caractérisé en ce que** l'unité d'entraînement (32a) de la machine de travail pour le jardin guidée manuellement (10a ; 10b) est commandée au moins en fonction d'une valeur d'une déformation détectée d'au moins une région partielle (20a ; 20b) d'une unité de guidage (14a ; 14b) dans l'état de fonctionnement d'attente (90a ; 90b).

13. Procédé selon l'une des revendications 11 et 12, **caractérisé en ce que** l'unité d'entraînement de l'assistance d'avancement de la machine de travail pour le jardin guidée manuellement (10b) est démarrée en fonction d'au moins un paramètre d'historique d'utilisation dans l'état de fonctionnement d'attente (90b) .

14. Procédé selon l'une des revendications 10 à 13, **caractérisé en ce que** dans un mode de conduite, par commande de l'unité d'entraînement de l'assistance d'avancement, la déformation de la région partielle (20b) de l'unité de guidage (14b) est réglée sur une valeur ou une plage de valeurs définie.

15. Procédé selon l'une des revendications 10 à 14, **caractérisé en ce que** l'unité d'entraînement de l'assistance d'avancement de la machine de travail pour le jardin guidée manuellement (10b) est arrêtée dans un fonctionnement de conduite en fonction d'au moins un paramètre d'historique d'utilisation.

16. Procédé selon l'une des revendications 10 à 15, **caractérisé en ce que** pendant un fonctionnement entre au moins deux phases de fonctionnement de conduite, un étalonnage de décalage (108b) d'au moins un capteur d'au moins une unité de détection (18b) de la machine de travail pour le jardin guidée manuellement (10b) est effectué automatiquement.
